(19) Europäisches Patentamt
European Patent Office
Office européen des brevets

(11) EP 4 580 039 A1

(12) **EUROPEAN PATENT APPLICATION**
published in accordance with Art. 153(4) EPC

(43) Date of publication:
**02.07.2025 Bulletin 2025/27**

(21) Application number: **23857058.4**

(22) Date of filing: **21.07.2023**

(51) International Patent Classification (IPC):
***H02P 27/08*** *(2006.01)* ***H02M 7/48*** *(2007.01)*

(52) Cooperative Patent Classification (CPC):
**H02M 7/48; H02P 27/08**

(86) International application number:
**PCT/JP2023/026761**

(87) International publication number:
**WO 2024/042942 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.08.2022 JP 2022132743**

(71) Applicant: **Hitachi, Ltd.**
**Tokyo 100-8280 (JP)**

(72) Inventors:
- **KUNIHIRO, Naoki**
  **Tokyo 100-8280 (JP)**
- **IKIMI, Takashi**
  **Tokyo 100-8280 (JP)**
- **KOJIMA, Tetsuo**
  **Tokyo 100-8280 (JP)**
- **MIYAKE, Wataru**
  **Tokyo 100-8280 (JP)**

(74) Representative: **Mewburn Ellis LLP**
**Aurora Building**
**Counterslip**
**Bristol BS1 6BX (GB)**

# (54) DRIVE CONTROL APPARATUS AND DRIVE CONTROL METHOD FOR ROTATING ELECTRICAL MACHINE

(57) In order to provide a PWM control technology that can output an accurate fundamental wave voltage while reducing harmonic current by adding an operation amount to modulation waves of three phases in accordance with the saturation states of the modulation waves of the three phases, this drive control apparatus for a rotating electrical machine drives the rotating electrical machine by controlling an electric power conversion device by means of a PWM signal that is generated by a PWM control unit from a carrier wave and three-phase modulation wave command values generated on the basis of a voltage command value. When the absolute value of a modulation wave command value of one phase, among the three-phase modulation wave command values, is greater than a prescribed value, a modulation wave operation unit, which is provided to the preceding stage to the PWM control unit, stops switching of the one phase by saturating the modulation wave, to the maximum value of the absolute value of the carrier wave, by adding an operation amount to the modulation wave command value of the one phase, and also adds the operation amount to the modulation wave command values of the remaining two phases. Moreover, when the absolute values of modulation wave command values of two phases, among the three-phase modulation wave command values, are greater than the prescribed value, the modulation wave operation unit stops switching of the two phases by saturating the modulation waves, to the maximum value of the absolute value of the carrier wave, by adding the operation amount to the modulation wave command values of the two phases.

EP 4 580 039 A1

FIG. 1

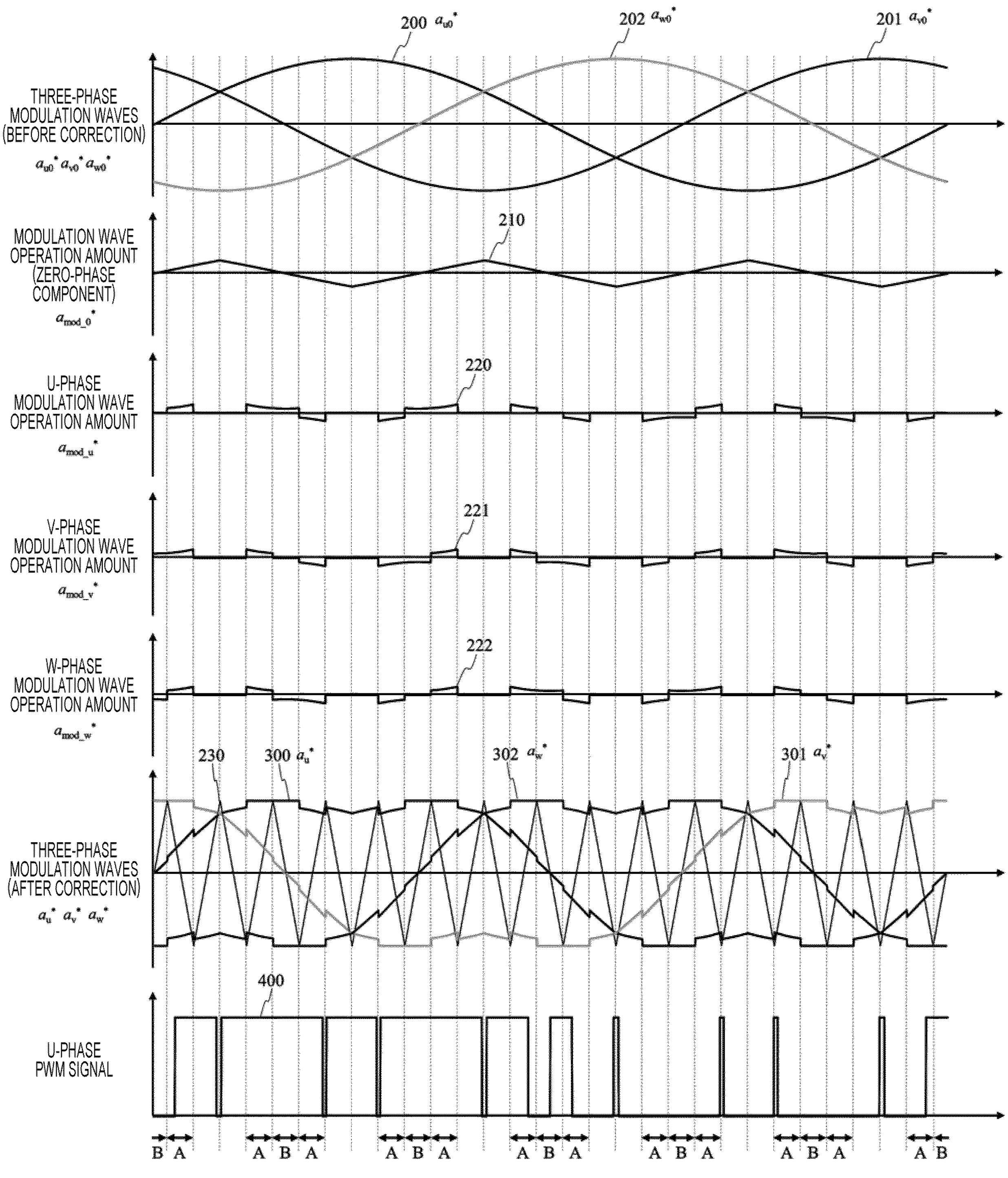
THREE-PHASE MODULATION WAVES (BEFORE CORRECTION)
$a_{u0}^*$ $a_{v0}^*$ $a_{w0}^*$
200 $a_{u0}^*$
202 $a_{w0}^*$
201 $a_{v0}^*$
MODULATION WAVE OPERATION AMOUNT (ZERO-PHASE COMPONENT)
$a_{mod_0}^*$
210
U-PHASE MODULATION WAVE OPERATION AMOUNT
$a_{mod_u}^*$
220
V-PHASE MODULATION WAVE OPERATION AMOUNT
$a_{mod_v}^*$
221
W-PHASE MODULATION WAVE OPERATION AMOUNT
$a_{mod_w}^*$
222
THREE-PHASE MODULATION WAVES (AFTER CORRECTION)
$a_u^*$ $a_v^*$ $a_w^*$
230
300 $a_u^*$
302 $a_w^*$
301 $a_v^*$
U-PHASE PWM SIGNAL
400
B A A B A A B A A B A A B A A B A A B

## Description

### Technical Field

The present invention relates to a drive control apparatus and a drive control method for a rotating electrical machine by PWM control.

### Background Art

In general, an inverter that converts DC power into AC power is used as a power converter for variable-speed driving of a rotating electrical machine.

In the inverter, a semiconductor element performs a switching operation by pulse width modulation (PWM) control to convert a DC voltage into an AC voltage having any frequency and any amplitude.

It is known that, when the rotating electrical machine is driven with an AC voltage by the PWM control, a harmonic current flows through the rotating electrical machine by a harmonic voltage included in a voltage waveform of the PWM control, and this leads to an increase in heat generation due to a decrease in efficiency and an increase in electromagnetic noise, as compared to driving with a sinusoidal voltage waveform. Therefore, in the PWM control, it is desirable to reduce the harmonic current by reducing distortion of a voltage waveform.

On the other hand, accurate voltage output is also required for the PWM control. As a factor of a voltage error caused by the PWM control, there are various factors such as an influence of a dead time error, and one of these factors is an influence of a restriction with the minimum pulse width.

Specifically, when a command value of a pulse width by the PWM control becomes extremely narrow and becomes equal to or less than the minimum pulse width (set minimum pulse width) determined from the characteristics of the semiconductor element and the delay characteristic of switching, there is a problem that the pulse width to be actually output is limited to the set minimum pulse width, and an error occurs between the command value and the actual output voltage.

In particular, a PWM pulse mode having a higher modulation rate and a higher switching frequency is more likely to have a narrower pulse width, and this problem is more likely to appear. In addition, when a voltage error has occurred, there is a problem that a torque error of the rotating electrical machine, an increase in current ripple, and the like are caused.

As described above, as a technical problem in the PWM control, it is required to accurately output the voltage while reducing the harmonic current.

Various improved technologies have been proposed for the above problems.

PTL 1 discloses a technology of performing control in accordance with a voltage command value obtained by adding 1/2 of an intermediate value of instantaneous voltage command values of phases to the instantaneous voltage command values of the phases for the purpose of reducing the harmonic current and improving a voltage utilization rate.

PTL 2 discloses a technology as follows. For the purpose of suppressing an occurrence of a voltage error and outputting an accurate voltage at the time of minimum pulse width limitation, a pulse width error caused by pulse width limitation of a phase voltage signal is calculated by an error in a line-to-line voltage pulse width, and the error in the line-to-line voltage pulse width is corrected by a pulse width of a phase voltage signal of a phase other than a phase in which the pulse width is limited. At the same time, an error in the line-to-line voltage pulse width due to the pulse width correction of the phase voltage signal is corrected by the pulse width of the phase voltage signal of a phase other than the two phases of the phase in which the minimum pulse width limitation has been performed, and the phase in which the pulse width correction has been performed.

### Citation List

#### Patent Literature

PTL 1: JP 3233097 B
PTL 2: JP 6311402 B

### Summary of Invention

## Technical Problem

The inventors of the present application have extensively conducted studies for the purpose of outputting an accurate fundamental wave voltage while reducing a harmonic current by PWM control, and as a result, have obtained the following findings.

The technology disclosed in PTL 1 discloses a technology for reducing a harmonic current by adding an operation amount of a modulation wave including a third harmonic component (a voltage waveform of a frequency component of three times a fundamental wave voltage) to a modulation wave of a three-phase sine wave to distort the modulation wave. However, when the modulation rate in one pulse mode (square wave driving) is set to 100%, there is a problem that only up to about 91% can be output at maximum under an ideal condition in which the minimum pulse width is ignored.

In particular, when an output voltage is limited to 91% in applications requiring high voltage utilization rate as in railway vehicles, a shortage of torque due to magnetic flux (voltage) is compensated by an increase in current, and loss of a motor and the inverter increases due to an increase in fundamental wave current. In addition, in some cases, there is a problem that the maximum output of the rotating electrical machine decreases and desired torque characteristics cannot be obtained.

In order to obtain a higher voltage utilization rate in PTL 1, means for increasing the modulation rate by setting an overmodulation state in which the peak value of the modulation wave is higher than that of a carrier wave, eliminating some pulses of the PWM control, and reducing the number of pulses. However, when the pulse is just eliminated, there is a problem that a voltage error occurs due to an operation of the modulation wave that eliminates this pulse.

In addition, in the technology disclosed in PTL 2, it is possible to suppress a voltage error by securing the minimum pulse width, but there is no disclosure of means for suppressing a voltage error caused when a pulse is eliminated. When the pulse is eliminated, it is necessary to correct the next pulse at a time point before half a cycle, but a configuration capable of calculating the voltage every half cycle is not provided. Furthermore, when two phases are subject to the restriction of the minimum pulse width, there is a problem that a voltage error remains and a correct fundamental wave voltage cannot be output.

As described above, there is room for improvement in reducing the harmonic current in the PWM control and outputting an accurate voltage.

Therefore, the present invention has been made in view of the above points, and on the basis of the technology disclosed in PTL 1, even in an overmodulation region in which a modulation wave is made higher than a carrier wave and some of PWM pulses are eliminated, a voltage error due to limitation of a minimum pulse width is suppressed while reducing a harmonic current, and an accurate voltage is output.

An object of the present invention is to provide a PWM control technology for outputting an accurate fundamental wave voltage while reducing a harmonic current by adding an operation amount to modulation waves of three phases in accordance with saturation states of the modulation waves of the three phases.

## Solution to Problem

In order to solve the above problems, one of typical drive control apparatuses for a rotating electrical machine according to the present invention is a drive control apparatus that drives the rotating electrical machine by controlling an electric power conversion device by a PWM signal generated by a PWM control unit from three-phase modulation wave command values generated on the basis of a voltage command value and a carrier wave. The drive control apparatus includes a modulation wave operation unit provided at a preceding stage of the PWM control unit. The modulation wave operation unit adds an operation amount to the modulation wave command value of one phase to be saturated up to a maximum value of an absolute value of the carrier wave and to stop switching of the one phase in the electric power conversion device, and adds the operation amount to modulation wave command values of the remaining two phases, when an absolute value of a modulation wave command value of the one phase among the three-phase modulation wave command values is greater than a prescribed value, and adds the operation amount to the modulation wave command values of the two phases to be saturated up to the maximum value of the absolute value of the carrier wave and to stop switching of the two phases in the electric power conversion device, when absolute values of the modulation wave command values of any two phase among the three-phase modulation wave command values are greater than the prescribed value.

## Advantageous Effects of Invention

According to the present invention, for example, in an overmodulation region, it is possible to output an accurate voltage while reducing a harmonic current, and it is possible to realize efficiency improvement and stable control of a drive system.

Objects, configurations, and advantageous effects other than those described above will be clarified by the descriptions in the following forms for embodying the present invention.

Brief Description of Drawings

[FIG. 1] FIG. 1 is a view illustrating an example of a relationship between a modulation wave and a carrier wave and a PWM voltage waveform according to the present invention.
[FIG. 2] FIG. 2 is a view illustrating an example of a drive apparatus for a rotating electrical machine to which a PWM control method according to Embodiment 1 is applied.
[FIG. 3] FIG. 3 is a view illustrating an example of functional blocks of a control apparatus according to Embodiment 1.
[FIG. 4] FIG. 4 is a view illustrating a relationship between a pulse command value and an output voltage when a pulse width of the pulse command value is sufficiently wide.
[FIG. 5] FIG. 5 is a view illustrating a relationship between a pulse command value and an output voltage when a pulse command value in which a pulse width of the pulse command value is equal to or less than a set minimum pulse width is output.
[FIG. 6] FIG. 6 is a view illustrating an example of a calculation method of a zero-phase modulation wave calculation unit.
[FIG. 7] FIG. 7 is a view illustrating a description of a waveform when a zero-phase voltage is added.
[FIG. 8] FIG. 8 is a view illustrating a waveform when a pulse is eliminated in advance by adding an operation amount to a modulation wave.
[FIG. 9] FIG. 9 is a view illustrating a waveform in a case where an operation amount is added to a modulation wave of another phase when a pulse is eliminated in advance by adding an operation amount to a modulation wave.
[FIG. 10] FIG. 10 is a flowchart illustrating an example of compensation amount calculation by a modulation wave error correction unit.
[FIG. 11] FIG. 11 is a view illustrating another example of the compensation amount calculation by the modulation wave error correction unit.
[FIG. 12] FIG. 12 is a view illustrating a waveform in which a pulse base of a carrier wave is 15 cycles and a PWM voltage waveform is synchronous 7 pulses.
[FIG. 13] FIG. 13 is a view illustrating a waveform in which the pulse base of the carrier wave is 21 cycles and the PWM voltage waveform is synchronous 21 pulses.
[FIG. 14] FIG. 14 is a view illustrating a waveform in which the pulse base of the carrier wave is 21 cycles, and the PWM voltage waveform is changed from a state of synchronous 21 pulses to synchronous 17 pulses.
[FIG. 15] FIG. 15 is a view illustrating a waveform in which the pulse base of the carrier wave is 21 cycles, and the PWM voltage waveform is changed from a state of synchronous 17 pulses to synchronous 13 pulses (synchronous 13 pulses A).
[FIG. 16] FIG. 16 is a view illustrating a waveform in a case of a modification example (synchronous 13 pulses B) of the synchronous 13 pulses illustrated in FIG. 15.
[FIG. 17] FIG. 17 is a view illustrating comparison of reduction effects of harmonic currents of synchronous PWM on the basis of synchronous 21 pulses.
[FIG. 18] FIG. 18 is a view illustrating comparison of reduction effects of harmonic currents of synchronous PWM on the basis of synchronous 15 pulses.
[FIG. 19] FIG. 19 is a view illustrating a waveform in which the pulse base of the carrier wave is 15 cycles, and the PWM voltage waveform is changed from a state of synchronous 17 pulses to synchronous 13 pulses.
[FIG. 20] FIG. 20 is a view illustrating a waveform in which the pulse base of the carrier wave is 21 cycles, and the PWM voltage waveform is changed from a state of synchronous 13 pulses to synchronous 9 pulses.
[FIG. 21] FIG. 21 is a view illustrating a waveform in which the pulse base of the carrier wave is 21 cycles, and the PWM voltage waveform is changed from a state of synchronous 9 pulses to synchronous 7 pulses.
[FIG. 22] FIG. 22 is a view illustrating a waveform in which the pulse base of the carrier wave is 21 cycles, and the PWM voltage waveform is changed from a state of synchronous 7 pulses to synchronous 3 pulses.
[FIG. 23] FIG. 23 is a view illustrating an example of functional blocks of a control apparatus used in Embodiment 2.
[FIG. 24] FIG. 24 is a view illustrating a relationship between a modulation rate (command value) of synchronous 11 pulses and an actual modulation rate when the pulse base of the carrier wave is 15 cycles.
[FIG. 25] FIG. 25 is a view illustrating an example of a configuration of a modulation wave amplitude correction unit added in Embodiment 2.
[FIG. 26] FIG. 26 is a view illustrating a relationship between a modulation rate (command value) and an actual modulation rate in another PWM mode.
[FIG. 27] FIG. 27 is a view illustrating a conceptual view of an output from an amplitude correction coefficient calculation unit when the modulation rate increases.
[FIG. 28] FIG. 28 is a view illustrating an example of functional blocks of a control apparatus used in Embodiment 3.
[FIG. 29] FIG. 29 is a view illustrating an example of an outline of functions by a PWM mode switching unit added in Embodiment 3.
[FIG. 30] FIG. 30 is a view illustrating a modification example of the functions by the PWM mode switching unit.
[FIG. 31] FIG. 31 is a view illustrating an example of a configuration of a railway vehicle according to Embodiment 4.
[FIG. 32] FIG. 32 is a view illustrating an example of distribution of harmonic currents when driving is performed with synchronous 11 pulses to synchronous 21 pulses according to Embodiments 1 to 3.

Description of Embodiments

Hereinafter, as a mode for carrying out the present invention, Embodiments 1 to 4 will be described in detail with reference to the drawings.
Here, in each embodiment, constituent elements having the same reference signs are indicated as constituent elements having the same or similar functions. In addition, in the embodiments described later, description of the same or similar constituent elements as those in the embodiments described above may be omitted.

[Embodiment 1]

FIG. 2 is a view illustrating an example of a drive apparatus for a rotating electrical machine to which a PWM control method according to Embodiment 1 is applied.
The drive apparatus includes a rotating electrical machine 4 to be controlled, a drive device 1 that drives the rotating electrical machine 4, a main circuit unit 3 that applies a three-phase AC voltage to the rotating electrical machine 4, a gate drive 6 that outputs a gate signal for driving the main circuit unit 3, a control apparatus 2 that outputs a PWM signal to the gate drive 6, and a current detector 5 that detects a current flowing through the rotating electrical machine 4 by the control apparatus 2.
The control apparatus 2 is mounted with a control program for driving and controlling the rotating electrical machine 4 connected as a load. A voltage command value is calculated by vector control or the like such that a current detection value by the current detector 5 becomes a current value according to a command value, and a PWM signal is output by pulse width modulation control (referred to as "PWM control" below).
The main circuit unit 3 includes a driving transistor such as an insulated gate bipolar transistor (IGBT) and a power device such as a diode. In FIG. 2, six switching elements Sup to Swn are illustrated, a DC voltage of a smoothing capacitor 7 is converted into an AC voltage on the basis of a switching command of the gate drive 6, and a three-phase AC voltage is applied to the rotating electrical machine 4.
The gate drive 6 outputs a gate signal on the basis of the PWM signal.
In the rotating electrical machine 4, a drive current flows by application of the three-phase AC voltage output from the main circuit unit 3, and a rotational torque is generated. As the rotating electrical machine 4, an induction motor, a synchronous motor, or the like is used.
The current detector 5 includes a hole current transformer (CT) or the like, and detects waveforms of three-phase currents $i_u$, $i_v$, and $i_w$ of a U-phase, a V-phase, and a W-phase flowing through the rotating electrical machine 4. However, the current detector 5 does not necessarily need to detect all the currents of the three phases, and the current detector 5 may be configured to detect any two phases of the three phases and obtain the remaining one phase by calculation assuming that the three-phase currents are in an equilibrium state.
FIG. 3 illustrates an example of functional blocks of the control apparatus according to Embodiment 1. Here, only the minimum necessary functional blocks for Embodiment 1 are illustrated.
A modulation wave command calculation unit 10 calculates a voltage command value by vector control (not illustrated) or the like on the basis of the three-phase currents $i_u$, $i_v$, and $i_w$ detected by the current detector 5, and outputs three-phase modulation wave command values $a_{uo}$*, $a_{v0}$*, and $a_{w0}$* on the basis of the voltage command value. A current control unit, a frequency calculation unit, a phase calculation unit, a voltage vector calculation unit, and the like used for general vector control are collectively referred to as a modulation wave command calculation unit 10 for simplification of description.
A PWM control unit 13 receives inputs of the three-phase modulation wave command values $a_u$*, $a_v$*, and $a_w$* corrected by a zero-phase modulation wave calculation unit 11 and a modulation wave error correction unit 12, compares the magnitude with a carrier wave of a triangular wave, and performs pulse width modulation. A PWM signal subjected to the pulse width modulation is output to the gate drive 6 (FIG. 2).
In addition, the PWM control unit 13 includes means for limiting a pulse width such as a dead time period or a minimum ON-time in order to prevent a failure of a switching element constituting the main circuit unit 3.
The limitation of the pulse width will be described below.

FIG. 4 illustrates a relationship between a pulse command value and an output voltage when a pulse width of the pulse command value is sufficiently wide.

Regarding the pulse command value, the pulse command value is calculated in consideration of a dead time period $T_{off}$, and the final output voltage coincides with the pulse command value. However, in a period in which both upper and lower arms are turned off, the potential is determined by the polarity of the current. Therefore, in FIG. 4, the current polarity during the dead time period is assumed to be positive, and the potential during the dead time period is set to zero (mark ※ on "output voltage" at the bottom of FIG. 4).

FIG. 5 illustrates a relationship between a pulse command value and an output voltage when a pulse command value in which a pulse width of the pulse command value is equal to or less than a set minimum pulse width is output.

When the pulse command value is narrower than the set minimum pulse width, the output voltage is limited to the minimum pulse width (= $2T_{off} + T_{on}$) under the restrictions of the dead time period $T_{off}$ and the minimum ON-time $T_{on}$ determined from element characteristics and switching delay characteristics. That is, the maximum modulation rate that can be output is determined by the minimum pulse width. Also in FIG. 5, the current polarity during the dead time period is assumed to be positive, and the potential during the dead time period is set to zero (mark ※ on "output voltage" at the bottom of FIG. 5).

As described above, when the command value of the pulse width in the PWM control is narrower than the minimum pulse width (set minimum pulse width), the output pulse width is limited to the set minimum pulse width, and the actual output voltage has an error with respect to the pulse command value.

In addition, it can be seen that the voltage error is likely to occur under a condition that three-phase modulation waves cross near the peak points of the peak and valley of the carrier wave, that is, in a PWM pulse mode in which the frequency of the carrier wave is high and the modulation rate is high.

When distortion reduction in an overmodulation region is achieved as one object of the present invention, it is necessary to increase a switching frequency even at a high modulation rate, and it can be seen that the above voltage error is likely to occur as compared with a pulse mode having a low switching frequency.

In order to solve such a problem, in Embodiment 1, the zero-phase modulation wave calculation unit 11 and the modulation wave error correction unit 12 illustrated in FIG. 3 reduce the harmonic current and suppress the voltage error by limiting the minimum pulse width for reducing distortion.

The zero-phase modulation wave calculation unit 11 illustrated in FIG. 3 calculates and outputs a zero-phase modulation wave correction amount $a_{mod_0}$* from the three-phase modulation wave command values $a_{u0}$*, $a_{v0}$*, and $a_{w0}$* in order to improve the voltage utilization rate and reduce the harmonic current.

FIG. 6 is a view illustrating an example of a calculation method of the zero-phase modulation wave calculation unit 11. In addition, FIG. 7 illustrates a description of a waveform when the zero-phase voltage is added.

FIG. 6 illustrates a method of adding an average value of the maximum value and the minimum value of the three-phase voltage command values to all the modulation waves of the three phases as a zero-phase modulation wave correction amount $a_{mod_0}$*, as disclosed in PTL 1, as one of preferable forms of the zero-phase modulation wave calculation.

However, the calculation method of the zero-phase modulation wave correction amount $a_{mod_0}$* may be a method of adding a sine wave having a frequency of 3× an integral multiple of a fundamental wave to the modulation wave command value of each phase, or the like. In addition, if a harmonic of 3×n (n is an integer) is included, similar effects can be obtained. As a result, the present invention is not limited to the zero-phase modulation wave correction amount $a_{mod_0}$* illustrated in FIG. 7.

In FIG. 7, by adding the zero-phase modulation wave correction amount $a_{mod_0}$* 210 including the third harmonic to three-phase modulation waves (before correction) 200 to 202, the corrected three-phase modulation waves become waveforms 300 to 302 in which the peak of the peak value of the modulation wave is suppressed with respect to the time of sine wave modulation, and can be output at a higher voltage utilization rate.

When the restriction of the minimum pulse width is ignored with one pulse mode (square wave drive) as the modulation rate of 100%, the range of the modulation rate that can be used without overmodulation can be used up to about 79% in the three-phase modulation waves (before correction) 200 to 202 as in (Math. 1).

On the other hand, as disclosed in PTL 1, 2/√3 times are obtained in the three-phase modulation waves (after correction) 300 to 302 when the zero-phase modulation wave correction amount $a_{mod_0}$* is added, and can be used up to about 91% as in (Math. 2).

[Math. 1]

$$V_c = \frac{\pi}{4} = 0.785$$

[Math. 2]

$$V_c = \frac{\pi}{4} \cdot \frac{2}{\sqrt{3}} = 0.907$$

As described above, when the zero-phase modulation wave correction amount $a_{mod_0}{}^*$ is added, it is ideally possible to use the range up to about 91%, but the pulse width is narrowed at a portion indicated as 500 of a U-phase PWM signal illustrated in FIG. 7. Here, by increasing the modulation rate, a value that is equal to or less than the minimum pulse width described with reference to FIG. 5 is obtained, and thus, it is not possible to actually use the range up to 91%.

In Embodiment 1, in the case of outputting a pulse narrower than the minimum pulse width with respect to the restriction of the minimum pulse width, the operation amount is added to the modulation wave in advance to eliminate the pulse, thereby preventing the occurrence of the voltage error.

FIG. 8 illustrates a waveform when the pulse is eliminated in advance by adding the operation amount to the modulation wave with respect to the waveform illustrated in FIG. 7.

At a portion where the pulse width is narrower than the minimum pulse width, an operation amount is added to the three-phase modulation waves in order to eliminate the pulse, and the absolute value of the modulation wave is made greater than that of the carrier wave only at this portion.

With the above operation, it is possible to prevent an output of a command value having a narrow pulse width and to avoid the occurrence of an error between the command value and the actual output voltage. However, by adding the operation amount to the modulation wave to eliminate the pulse, the voltage ($a_{u0}{}^{**}$, $a_{v0}{}^{**}$, and $a_{w0}{}^{**}$ illustrated in FIG. 3) that is originally intended to be output has an error. This error is a U-V modulation wave error 600 illustrated in FIG. 8 and occurs in a period in which the pulse of each phase is eliminated with respect to the modulation waves ($a_{u0}{}^{**}$, $a_{v0}{}^{**}$, and $a_{w0}{}^{**}$) that are originally intended to be output.

In this mode in which the pulse is eliminated by the modulation wave operation, the amplitude of the modulation wave is increased by adding the operation amount at the portion where the pulse becomes narrower than the minimum pulse width, so that an error occurs in a direction in which the finally output voltage becomes larger than the original command value ($a_{u0}{}^{**}$, $a_{v0}{}^{**}$, and $a_{w0}{}^{**}$ illustrated in FIG. 3).

Therefore, measures have been taken to reduce the U-V modulation wave error 600 illustrated in FIG. 8.

FIG. 9 is a view illustrating a waveform in a case where the operation amount is added to the modulation wave of another phase when the pulse is eliminated in advance by adding the operation amount to the modulation wave. That is, regarding the modulation wave (FIG. 8) in which the pulse is eliminated by adding the operation amount to the modulation wave obtained by adding the zero-phase modulation wave correction amount (FIG. 7), the operation amount is added to the modulation waves of other phases. That is, in a period in which the pulse is eliminated by adding the operation amount to the modulation wave of only one phase, the same amount as the operation amount is also added to the modulation waves of the remaining two phases.

For example, in a period in which the pulse is eliminated by adding an operation amount $a_{mod_u}{}^*$ to the U-phase modulation wave, the common operation amount $a_{mod_u}{}^*$ is also added to the remaining V-phase and W-phase modulation waves. As a result, the phase voltage of the rotating electrical machine 4 changes as shown in (Math. 3), but as shown in (Math. 4) and (Math. 5), the phase voltage does not influence the line-to-line voltage (here, between U and V) applied to the rotating electrical machine 4 before and after the operation amount $a_{mod_u}{}^*$ is applied.

[Math. 3]

$$\begin{cases} a_u{}^* = a_{u0}{}^{**} + a_{mod_u}{}^* \\ a_v{}^* = a_{v0}{}^{**} + a_{mod_u}{}^* \\ a_w{}^* = a_{w0}{}^{**} + a_{mod_u}{}^* \end{cases}$$

[Math. 4]

$$a_{u0-v0}{}^{*} = a_{u0}{}^{**} - a_{v0}{}^{**}$$

[Math. 5]

$$a_{u-v}{}^{*} = a_{u}{}^{*} - a_{v}{}^{*}$$

$$= a_{u0}{}^{**} - a_{v0}{}^{**}$$

In general, since the neutral point of the rotating electrical machine 4 is not connected, the voltage applied to the rotating electrical machine 4 does not change as long as the line-to-line voltage applied to the rotating electrical machine 4 does not change.

For the above reason, in a period in which switching is stopped by adding the operation amount to the modulation wave of one phase, the same amount as the operation amount is also added to the modulation waves of the remaining two phases, so that it is possible to cancel the U-V modulation wave error 600. Here, the description has been given using the U-V interval, but the V-W interval and the W-U interval can be similarly canceled.

Comparing the U-V modulation wave error 600 illustrated in FIGS. 8 and 9, the effect of reducing the modulation wave error can be obtained, but the error of the modulation wave slightly remains as in the U-V modulation wave error 600 illustrated in FIG. 9, in a period in which the pulse is eliminated by adding the operation amount to the modulation waves of two phases. This is because the error occurring in the line-to-line voltage cannot be canceled by the operation of only the remaining one phase. However, a method for solving this problem will be described later in Embodiment 2.

Here, an operation mode of the modulation wave error correction unit 12 illustrated in FIG. 3 will be described.

FIG. 10 is a flowchart illustrating an example of compensation amount calculation by the modulation wave error correction unit 12.

As illustrated in FIG. 5, saturation of a modulation wave of one phase or saturation of modulation waves of two or more phases is determined from comparison between the command value of the pulse width of each phase and the set minimum pulse width, and $a_{mod_w}{}^{*}$ is calculated from the operation amount $a_{mod_u}{}^{*}$ of each of the U-phase to the W-phase. Note that FIG. 10 illustrates only a flowchart for calculating a compensation amount $a_{mod_u}{}^{*}$ of the U-phase, and does not illustrate the V-phase and the W-phase, but the compensation amount is calculated in a similar flow also in the V-phase and the W-phase.

In addition, in FIG. 10, a configuration in which the command value of the pulse width of each phase is sequentially compared with the set minimum pulse width is made, but the present invention is not necessarily limited to this configuration as long as the similar compensation method is used.

For example, in the synchronous PWM, the phase relationship between the modulation wave and the carrier wave is synchronized. Thus, when the modulation rate is increased, the phase in which the pulse width is first narrower than the minimum pulse width is always the same (when viewed in FIG. 7, a portion indicated as 500 of the U-phase PWM signal), and the number of phases saturated in each phase (only one phase, two or more phases, or the like) is also naturally determined.

Therefore, as illustrated in FIG. 11, the modulation wave error correction unit 12 (distinguished as 12a in FIG. 11) in the synchronous PWM may be configured to determine the compensation amount of each phase from the relationship between the voltage phase and the modulation rate without sequentially comparing the saturation states of the phases.

FIG. 1 is a view illustrating an example of the relationship between the modulation wave and the carrier wave, and the PWM voltage waveform according to the present invention.

The zero-phase modulation wave correction amount $a_{mod_0}{}^{*}$ 210 (the second stage in FIG. 1) calculated by the zero-phase modulation wave calculation unit 11 is added to the three-phase modulation waves 200 to 202 (the uppermost stage in FIG. 1) of the sine wave before correction.

Further, in order to avoid the pulse width limitation due to the set minimum pulse width, when the absolute value of the command value of the modulation wave of the control apparatus 2 is greater than the value of the modulation wave determined from the set minimum pulse width, the pulse is eliminated by adding the operation amounts 220 to 222 (the third to fifth stages in FIG. 1) to the modulation wave (the period indicated as A and B in the lowermost stage in FIG. 1). At this time, in the period in which the pulse is eliminated by adding the operation amount to the modulation wave of only one phase, the same amount as the operation amount is also added to the modulation waves of the remaining two phases (the period indicated as A in the lowermost stage of FIG. 1). Here, the period A in the lowermost stage of FIG. 1 indicates a period in which the absolute value of the modulation wave of one phase is greater than the prescribed value, and the period B in the lowermost stage of FIG. 1 indicates a period in which the absolute value of the modulation wave of two or more phases is greater than the prescribed value. The same applies to the period A and the period B in FIGS. 10, 12 to 14, and 17 to 20.

Through these operations, the corrected three-phase modulation waves 300 to 302 can be obtained.

In the above description of FIGS. 1 and 7 to 9, an example in which the pulse base (peak-valley cycle) of the carrier wave is 15 cycles (15PB) in one cycle of the voltage waveform, and the pulse is eliminated to change the PWM voltage waveform from a state of the synchronous 15 pulses to the synchronous 11 pulses has been described. This is merely an example, and even when the number of peak-valley cycles of the carrier wave is changed, a similar effect can be obtained by applying the same method.

FIG. 12 illustrates a waveform in which the pulse base (peak-valley cycle) of the carrier wave is 15 cycles (15PB) in one cycle of the voltage waveform and the PWM voltage waveform has a waveform of synchronous 7 pulses.

FIG. 13 illustrates a waveform before elimination of the pulse of the synchronous 21 pulses in the PWM voltage waveform, in which the pulse base (peak/valley cycle) of the carrier wave is 21 cycles (21PB) in one cycle of the voltage waveform.

FIG. 14 illustrates a waveform in which the pulse base (peak/valley cycle) of the carrier wave is 21 cycles (21PB) in one cycle of the voltage waveform, and the pulse is eliminated to change the PWM voltage waveform from a state of the synchronous 21 pulses to the synchronous 17 pulses.

FIG. 15 illustrates a waveform in which the pulse base (peak/valley cycle) of the carrier wave is 21 cycles (21PB) in one cycle of the voltage waveform, the pulse is further eliminated from FIG. 14 to change the PWM voltage waveform from a state of synchronous 17 pulses to synchronous 13 pulses (synchronous 13 pulses A).

FIG. 16 illustrates a waveform in a case of a modification example (synchronous 13 pulses B) of the synchronous 13 pulses illustrated in FIG. 15.

In a method of the operation in this modification example, in a period in which the pulses of two phases are eliminated, it is not possible to suppress the error of the modulation wave viewed between the lines by operating only the remaining one phase, but it is possible to add any operation amount. Therefore, as indicated as a period C, in a period in which the absolute values of modulation waves of two phases become greater than a prescribed value, an operation amount is added to the remaining one phase. That is, the period C is a period in which the absolute values of the modulation waves of two or more phases become greater than the prescribed value and the operation amount is applied to the remaining one phase. On the other hand, a period B of FIG. 14 is a period in which the absolute values of the modulation waves of two or more phases become greater than the prescribed value, but the operation amount is not applied to the remaining one phase.

For example, a configuration in which, regarding the period in which the operation amount is added as the period A at the time of the synchronous 17 pulses illustrated in FIG. 14, a period in which the operation amount is added to the remaining one phase is continued, like the period C, in consideration of the continuity of the calculation process of the mode switching between the synchronous 17 pulses and the synchronous 13 pulses and the characteristics of the harmonic current.

By taking the above PWM mode as an example, the effects of reducing the harmonic current by the presence or absence of the correction by the zero-phase modulation wave and the modulation wave compensation to another phase at the time of pulse elimination are compared.

FIG. 17 illustrates comparison of reduction effects of harmonic currents of synchronous PWM on the basis of synchronous 21 pulses. The vertical axis in FIG. 17 indicates the square root sum of the harmonic current of each frequency component in each PWM mode. The PWM mode is such that the smaller the value of the square root sum, the smaller the total amount of harmonic currents.

Similarly, FIG. 18 illustrates comparison of reduction effects of harmonic currents of synchronous PWM on the basis of the synchronous 15 pulses.

<Effects of Reducing Distortion by Addition of Zero-Phase Modulation Wave >

Compared to the characteristics in the case of operating with sine wave modulation of the synchronous 21 pulses on the basis of the synchronous 21 pulses of FIG. 17(a), the effect of reducing the harmonic current can be obtained by adding the zero-phase component to the sinusoidal modulation wave of the synchronous 21 pulses on the basis of the synchronous 21 pulses of FIG. 17(b).

Compared to the characteristics in the case of operating with sine wave modulation of the synchronous 15 pulses on the basis of the synchronous 15 pulses of FIG. 18(g), the effect of reducing the harmonic current can be similarly obtained and the effect can be obtained regardless of the pulse basis or the like even when the zero-phase component is added to the sinusoidal modulation wave of the synchronous 15 pulses on the basis of the synchronous 15 pulses of FIG. 18(h).

<Effects of Reducing Distortion by Modulation Wave Operation Amount>

In FIG. 17, (c) illustrates characteristics when the switching is stopped by operating the modulation wave on the basis of the synchronous 21 pulses and the compensation is not added to the modulation wave of the other phase at the time of the synchronous 17 pulses, and (d) illustrates characteristics when the switching is stopped by operating the modulation wave on the basis of the synchronous 21 pulses and the compensation is added to the modulation wave of the other phase at the time of the synchronous 17 pulses. Compared to (c), in (d), by correcting the modulation wave to suppress the voltage distortion, the effect of reducing the harmonic current can be obtained at any modulation rate.

As is clear from the comparison between (e) and (f) of FIG. 17 (synchronous 13 pulses), the comparison between (i) and (j) of FIG. 18 (synchronous 11 pulses), and the comparison between (k) and (l) of FIG. 18 (synchronous 7 pulses), the effect of reducing the harmonic current can be obtained by adding the operation amount of the modulation wave regardless of the type of the carrier wave or the PWM mode.

For example, in the case of be used on the basis of the synchronous 15 pulses, the synchronous 15 pulses of FIG. 18(h) is used at a low modulation rate, and the modulation rate is switched to the synchronous 11 pulses of FIG. 18(j) at a timing at which the modulation rate increases and the minimum pulse width is limited. Then, switching to the synchronous 7 pulses of FIG. 18(l) is performed and the synchronous 7 pulses are used, at a timing at which the synchronous 11 pulses are limited to the minimum pulse width.

In addition, as a case of further increasing the modulation rate, FIG. 19 illustrates a waveform in which the pulse base (peak/valley cycle) of the carrier wave is 15 cycles (15PB) in one cycle of the voltage waveform, and the PWM voltage waveform is changed from a state of the synchronous 7 pulses to the synchronous 3 pulses.

In the synchronous 3 pulses, the absolute values of the modulation waves of two or more phases are greater than the prescribed value in any period, and thus only the process of adding the operation amount to the modulation wave and stopping the switching is performed. This makes it possible to prevent the occurrence of a voltage error due to the minimum pulse width.

As described above, when the carrier wave is on the basis of 15 pulses, the pulse mode is switched stepwise in the order of the synchronous 15 pulses → the synchronous 11 pulses → the synchronous 7 pulses → the synchronous 3 pulses → the synchronous 1 pulse, in accordance with a desired voltage utilization rate.

FIG. 20 illustrates a waveform in which the pulse base (peak/valley cycle) of the carrier wave is 21 cycles (21PB) in one cycle of the voltage waveform, and the PWM voltage waveform is changed from a state of the synchronous 13 pulses to the synchronous 9 pulses.

FIG. 21 illustrates a waveform in which the pulse base (peak/valley cycle) of the carrier wave is 21 cycles (21PB) in one cycle of the voltage waveform, and the PWM voltage waveform is changed from a state of the synchronous 9 pulses to the synchronous 7 pulses.

FIG. 22 illustrates a waveform in which the pulse base (peak/valley cycle) of the carrier wave is 21 cycles (21PB) in one cycle of the voltage waveform, and the PWM voltage waveform is changed from a state of the synchronous 7 pulses to the synchronous 3 pulses.

Next, when the carrier wave is on the basis of 21 pulses, similarly, the pulse mode is switched stepwise in the order of the synchronous 21 pulses → the synchronous 17 pulses → the synchronous 13 pulses → the synchronous 9 pulses → the synchronous 7 pulses → the synchronous 3 pulses → the synchronous 1 pulse, in accordance with a desired voltage utilization rate.

On the basis of the 21 pulses, in a mode in which the number of pulses is less than that of the synchronous 9 pulses illustrated in FIG. 20, the absolute values of the modulation waves of two or more phases are greater than the prescribed value in any period, and thus only the process of adding the operation amount to the modulation wave and stopping the switching is performed.

In addition, the timing at which the pulse of the PWM mode is eliminated needs to be switched at least at a timing limited by the minimum pulse width, but may be switched before being limited by the minimum pulse width, for the purpose of reducing the number of times of switching of the inverter and suppressing the temperature rise (loss) of the main circuit unit 3.

Furthermore, also in the pattern of the PWM mode, it is not always necessary to sequentially switch all the modes described above, and for example, a halfway pulse mode may be skipped, such as transitioning from the synchronous 21 pulses to the synchronous 13 pulses.

Note that, in Embodiment 1, the method for adding the operation amount to the three-phase modulation waves has been described, and a configuration in which the similar process is applied to three-phase voltage waveforms, a PWM pulse waveform, or the carrier wave may be made.

As for the modulation wave correction by the modulation wave error correction unit 12 in Embodiment 1, the state in which the zero-phase modulation wave is added to the sinusoidal three-phase modulation waves by the zero-phase modulation wave calculation unit 11 has been described as a preferable mode. However, as a matter of course, even if the correction is performed on the sinusoidal three-phase modulation waves, the distortion of the voltage waveform is suppressed, and the effect of reducing the harmonic current and improving the voltage output accuracy can be obtained.

As described above, according to the configuration of Embodiment 1, it is possible to obtain the effect of reducing the harmonic current while reducing the voltage error due to the minimum pulse width in the overmodulation region.

[Embodiment 2]

The configuration in Embodiment 2 is different from Embodiment 1 in that a modulation wave amplitude correction unit 20 is added to the control apparatus 2.

FIG. 23 is a view illustrating an example of functional blocks of a control apparatus used in Embodiment 2.

Although Embodiment 1 has been described above with reference to FIG. 9, in a period in which a pulse is eliminated by adding an operation amount to modulation waves of two phases, an error occurring in a line-to-line voltage cannot be canceled by the operation of only the remaining one phase, and thus, an error of the modulation wave slightly remains as in the U-V modulation wave error 600 illustrated in FIG. 9.

FIG. 24 illustrates a relationship between a modulation rate (command value) and an actual modulation rate in synchronous 11 pulses in which the pulse base of the carrier wave is 15 cycles in one cycle of the voltage waveform. (j) and (i) of FIG. 24 are obtained by comparison of the modulation rate (fundamental wave voltage) in the presence or absence of modulation wave compensation to another phase described above in Embodiment 1, and it can be seen that the voltage output accuracy is improved in the case of "with compensation" of (j) (effect described in Embodiment 1).

However, also in FIG. 24(j), an actual modulation rate Am has an error with respect to a modulation rate (command value) Am* due to an influence of the U-V modulation wave error 600 illustrated in FIG. 9.

Therefore, in Embodiment 2, an error in a period in which a pulse is eliminated by adding an operation amount to modulation waves of two phases is corrected to be correctly output when viewed as an entire cycle of a voltage waveform.

FIG. 25 illustrates an example of a configuration of the modulation wave amplitude correction unit 20 added in Embodiment **2.**

An amplitude correction coefficient calculation unit 21 receives inputs of the PWM mode and the modulation rate (command value) Am*, and outputs an amplitude correction coefficient. As illustrated in FIG. 24, the relationship between the modulation rate (command value) Am* and the actual modulation rate Am can be defined in advance for each PWM mode. A correction coefficient for equalizing the relationship between the modulation rate (command value) and the actual modulation rate is derived. For the calculation of the correction coefficient, a configuration in which a function obtained by functionalizing the characteristics illustrated in FIGS. 24 and 26 is used, or table data illustrated in FIGS. 24 and 26 is directly used may be adopted.

Regarding this, in Embodiment 2, the synchronous PWM in which the carrier wave and the modulation wave are synchronized is used as the premise, and thus, the timing of eliminating the pulse and the influence of an elimination operation on the voltage error are uniquely determined.

The influence of the U-V modulation wave error 600 illustrated in FIG. 9 cannot be corrected at that moment, but can be corrected such that the modulation rate (command value) Am* coincides with the actual modulation rate Am when viewed in the entire one cycle of the voltage waveform.

FIG. 26 illustrates a relationship between the modulation rate (command value) and the actual modulation rate in another PWM mode.

The relationship between the modulation rate (command value) Am* and the modulation rate Am varies depending on the PWM mode, and thus the correction coefficient is switched for each PWM mode.

FIG. 27 illustrates a conceptual view of an output from the amplitude correction coefficient calculation unit 21 when the modulation rate increases.

The amplitude correction coefficient having a different slope is output for each PWM mode in accordance with the PWM mode and the modulation rate (command value) Am*.

As described above, the drive apparatus for a rotating electrical machine to which the PWM control method according to Embodiment 2 is applied corrects the modulation wave amplitude for each PWM mode by the modulation wave amplitude correction unit 20, whereby it is possible to correct a voltage error in a period in which a pulse is eliminated by adding an operation amount to modulation waves of two phases, and to output an accurate fundamental wave voltage. As a result, in Embodiment 2, it is possible to reduce the occurrence of torque errors and current ripples as compared with Embodiment 1.

[Embodiment 3]

Embodiment 3 is different from Embodiment 2 described above in that a PWM mode switching unit 22 is further added to the control apparatus 2.

For example, in a railway vehicle, a contact line voltage greatly varies depending on a delivery voltage of a substation, a distance between the vehicle and the substation, and an operation state of another vehicle. Therefore, the modulation rate at the time of acceleration/deceleration also greatly changes. In addition, not only starting from the stop but also restarting from the coasting (free run) is required. Therefore, it is necessary to accurately output the voltage even at any frequency and modulation rate including the time when the contact line voltage varies.

In addition, as described above in Embodiment 1, regarding the restriction by the minimum pulse width, the limited range is also expanded as the switching frequency is increased at a high modulation rate (for example, in a case of driving in a high-speed range by multi-pulse synchronous PWM). Therefore, the range in which the voltage output with the minimum pulse width is possible also changes depending on the frequency in each PWM mode.

FIG. 28 is a view illustrating an example of functional blocks of a control apparatus used in Embodiment 3.

The PWM mode switching unit 22 receives inputs of the inverter frequency, the modulation rate, and the minimum pulse width, and outputs a PWM mode switching signal to the modulation wave amplitude correction unit 20 and the modulation wave error correction unit 12.

FIG. 29 illustrates an example of an outline of functions by the PWM mode switching unit 22 added in Embodiment 3.

In Embodiment 3, the PWM mode range to be used is defined in accordance with the inverter frequency and the modulation rate. For example, in FIG. 29, synchronous PWM-A to synchronous PWM-D are defined in accordance with the inverter frequency and the modulation rate. In addition, the regions of the PWM modes are divided by the "modulation rate output limit in synchronous PWM-X (X: any one of A to C)" illustrated in FIG. 29, but the regions of the PWM modes are set so as not to exceed the restriction of the minimum pulse width in each PWM mode. As a result, it is possible to accurately output the voltage at any frequency and modulation rate without being restricted by the minimum pulse width in each PWM mode.

FIG. 30 illustrates a modification example of the functions by the PWM mode switching unit 22.

Also in the function of this modification, similarly to FIG. 29, the regions of the PWM modes are divided by the "modulation rate output limit in synchronous PWM-X (X: any one of A to C)", but the regions of the PWM modes are set so as not to exceed the restriction of the minimum pulse width in each PWM mode. Here, four patterns A to C are described as an example, but the number of patterns is not limited.

Further, for the purpose of reducing harmonic loss and noise of the rotating electrical machine 4, a configuration in which the PWM mode is driven by multi-pulse synchronous PWM may be made. At this time, in order to prevent the restriction on the modulation rate by the minimum pulse width, the modulation rate is controlled by weak field control or the like.

As described above, the drive apparatus for the rotating electrical machine to which the PWM control method according to Embodiment 3 is applied switches the PWM mode in accordance with the region defined in consideration of the restriction of the minimum pulse width with respect to the inverter frequency and the modulation rate, so that it is possible to accurately output the fundamental wave voltage at any frequency and modulation rate. As a result, it is possible to accurately output the voltage even at the time of the contact line voltage varying or at the time of restarting from coasting (free run).

[Embodiment 4]

Embodiment 4 is a railway vehicle equipped with the drive apparatus in any of Embodiments 1 to 3 described above.

In a railway vehicle, the resonance frequency of a vehicle body is often about 400 to 600 Hz. When the harmonic current of the 400 to 600 Hz component flowing through the rotating electrical machine 4 is large, there is a problem that this leads to vehicle body resonance and leads to an increase in noise.

In a drive apparatus for a railway vehicle, although an electrical angular frequency depends on the number of poles of the rotating electrical machine 4, the asynchronous PWM is generally switched to the synchronous PWM within a range in which the electrical angular frequency of the driving frequency of the rotating electrical machine 4 is about 50 to 100 Hz.

In the asynchronous PWM, a current of a frequency component near one time or two times the carrier frequency is generated.

On the other hand, in the synchronous PWM, the voltage waveform is synchronized with the driving frequency, and, when the value of the fifth or seventh lower-order component is large in the current harmonic included in the current waveform, the frequency components are approximately 250 to 500 Hz and 350 to 700 Hz, respectively. This causes a problem that coincidence with the vehicle body resonance frequency leads to an increase in noise.

FIG. 31 is a view illustrating an example of a configuration of the railway vehicle according to Embodiment 4.

A truck 101 is mounted on a railway vehicle 100, and wheels 102 are provided on the truck 101. The rotating electrical machine 4 is connected to each shaft of the wheel 102 via a gear or a coupling (not illustrated).

FIG. 32 illustrates an example of distribution of harmonic currents when driving is performed with synchronous 11 pulses to synchronous 21 pulses according to Embodiments 1 to 3. The horizontal axis represents the order of harmonics, and the vertical axis represents the current amplitude.

FIG. 32(a) illustrates a case of synchronous 21 pulses on the basis of the synchronous 21 pulses, and FIG. 32(b) illustrates a case of synchronous 17 pulses on the basis of the synchronous 21 pulses. FIG. 32(c) illustrates a case of synchronous 15 pulses on the basis of the synchronous 15 pulses, and FIG. 32(d) illustrates a case of synchronous 11 pulses on the basis of the synchronous 15 pulses.

These are examples of the PWM mode assuming that about 50 to 100 Hz is used at the time of passing. By obtaining the PWM voltage waveform with low distortion according to the present invention, it is possible to reduce fifth-order and seventh-order harmonic currents and to reduce noise of a railway vehicle.

As described above, in the railway vehicle equipped with the drive apparatus for the rotating electrical machine to which the PWM control method according to any one of Embodiments 1 to 3 is applied, the effect of noise reduction can be obtained by reducing the lower-order current harmonics.

In addition, in the above description, Embodiments 1 to 4 have been described as the modes for carrying out the present invention, but the present invention is not limited to each of the above-described embodiments, and various modifications can be made without departing from the gist of the present invention.

Reference Signs List

| | |
|---|---|
| 1 | drive device |
| 2 | control apparatus |
| 3 | Main circuit unit |
| 4 | rotating electrical machine |
| 5 | current detector |
| 6 | gate drive |
| 7 | smoothing capacitor |
| 10 | modulation wave command calculation unit |
| 11 | zero-phase modulation wave calculation unit |
| 12 | modulation wave error correction unit |
| 13 | PWM control unit |
| 20 | modulation wave amplitude correction unit |
| 21 | amplitude correction coefficient calculation unit |
| 22 | PWM mode switching unit |
| 100 | railway vehicle |
| 101 | carriage |
| 102 | wheel |
| 200 | U-phase modulation wave (before correction) |
| 201 | V-phase modulation wave (before correction) |
| 202 | W-phase modulation wave (before correction) |
| 210 | zero-phase modulation wave correction amount |
| 220 | U-phase modulation wave operation amount |
| 221 | V-phase modulation wave operation amount |
| 222 | W-phase modulation wave operation amount |
| 230 | carrier wave |
| 300 | U-phase modulation wave (after correction) |
| 301 | V-phase modulation wave (after correction) |
| 302 | W-phase modulation wave (after correction) |
| 400 | U-phase PWM signal |
| 500 | portion in which pulse width is narrowed |
| 600 | U-V modulation wave error |

**Claims**

**1.** A drive control apparatus for a rotating electrical machine that drives the rotating electrical machine by controlling an electric power conversion device by a PWM signal generated by a PWM control unit from three-phase modulation wave command values generated on the basis of a voltage command value and a carrier wave, the drive control apparatus comprising:

a modulation wave operation unit provided at a preceding stage of the PWM control unit,
wherein the modulation wave operation unit
when an absolute value of a modulation wave command value of one phase among the three-phase modulation wave command values is greater than a prescribed value, adds an operation amount to the modulation wave command value of the one phase to be saturated up to a maximum value of an absolute value of the carrier wave and to stop switching of the one phase in the electric power conversion device, and adds the operation amount to modulation wave command values of the remaining two phases, and
when absolute values of the modulation wave command values of any two phases among the three-phase modulation wave command values are greater than the prescribed value, adds the operation amount to the modulation wave command values of the two phases to be saturated up to the maximum value of the absolute value of the carrier wave and to stop switching of the two phases in the electric power conversion device.

**2.** The drive control apparatus for a rotating electrical machine according to claim 1,
wherein the prescribed value is a value of a modulation wave determined on the basis of a minimum pulse width corresponding to a state in which an output of the electric power conversion device is possible.

**3.** The drive control apparatus for a rotating electrical machine according to claim 1 or 2,
wherein the modulation wave operation unit adds, to each of the three-phase modulation wave command values, a zero-phase component including a frequency component that is an integral multiple of three of a fundamental wave frequency of the three-phase modulation wave command values.

**4.** The drive control apparatus for a rotating electrical machine according to any one of claims 1 to 3, further comprising:

a modulation wave amplitude correction unit in the modulation wave operation unit,
wherein the modulation wave amplitude correction unit corrects the modulation wave command value in accordance with a PWM mode during driving of the electric power conversion device and a fundamental wave of the three-phase modulation wave command values, and causes a fundamental wave amplitude of the voltage command value to coincide with a fundamental wave amplitude of an output voltage of the electric power conversion device.

**5.** The drive control apparatus for a rotating electrical machine according to any one of claims 2 to 4,
wherein the modulation wave operation unit performs switching to a PWM mode according to a frequency and a modulation rate by using a use range of the PWM mode defined on the basis of the frequency for driving the electric power conversion device, and the modulation rate and the minimum pulse width in the PWM control unit.

**6.** A drive control method for a rotating electrical machine, the method that drives the rotating electrical machine by PWM-controlling an electric power conversion device by a PWM signal generated from three-phase modulation wave command values generated on the basis of a voltage command value and a carrier wave, the drive control method comprising:

when an absolute value of a modulation wave command value of one phase among the three-phase modulation wave command values is greater than a prescribed value, adding an operation amount to the modulation wave command value of the one phase to be saturated up to a maximum value of an absolute value of the carrier wave and to stop switching of the one phase in the electric power conversion device, and adding the operation amount to modulation wave command values of the remaining two phases, and
when absolute values of the modulation wave command values of any two phases among the three-phase modulation wave command values are greater than the prescribed value, adding the operation amount to the modulation wave command values of the two phases to be saturated up to the maximum value of the absolute value of the carrier wave and to stop switching of the two phases in the electric power conversion device.

**7.** The drive control method for a rotating electrical machine according to claim 6,
wherein the prescribed value is a modulation wave command value determined on the basis of a minimum pulse width corresponding to a state in which an output of the electric power conversion device is possible.

**8.** The drive control method for a rotating electrical machine according to claim 6 or 7, further comprising:
adding, to each of the three-phase modulation wave command values, a zero-phase component including a frequency component that is an integral multiple of three of a fundamental wave frequency of the three-phase modulation wave command values.

9. The drive control method for a rotating electrical machine according to any one of claims 6 to 8, further comprising: correcting the modulation wave command value in accordance with a PWM mode during driving of the electric power conversion device and a fundamental wave of the three-phase modulation wave command values, and causing a fundamental wave amplitude of the voltage command value to coincide with a fundamental wave amplitude of an output voltage of the electric power conversion device.

10. The drive control method for a rotating electrical machine according to any one of claims 7 to 9, further comprising: performing switching to a PWM mode according to a frequency and a modulation rate by using a use range of the PWM mode defined on the basis of the frequency for driving the electric power conversion device, and the modulation rate and the minimum pulse width in the PWM control.

FIG. 1

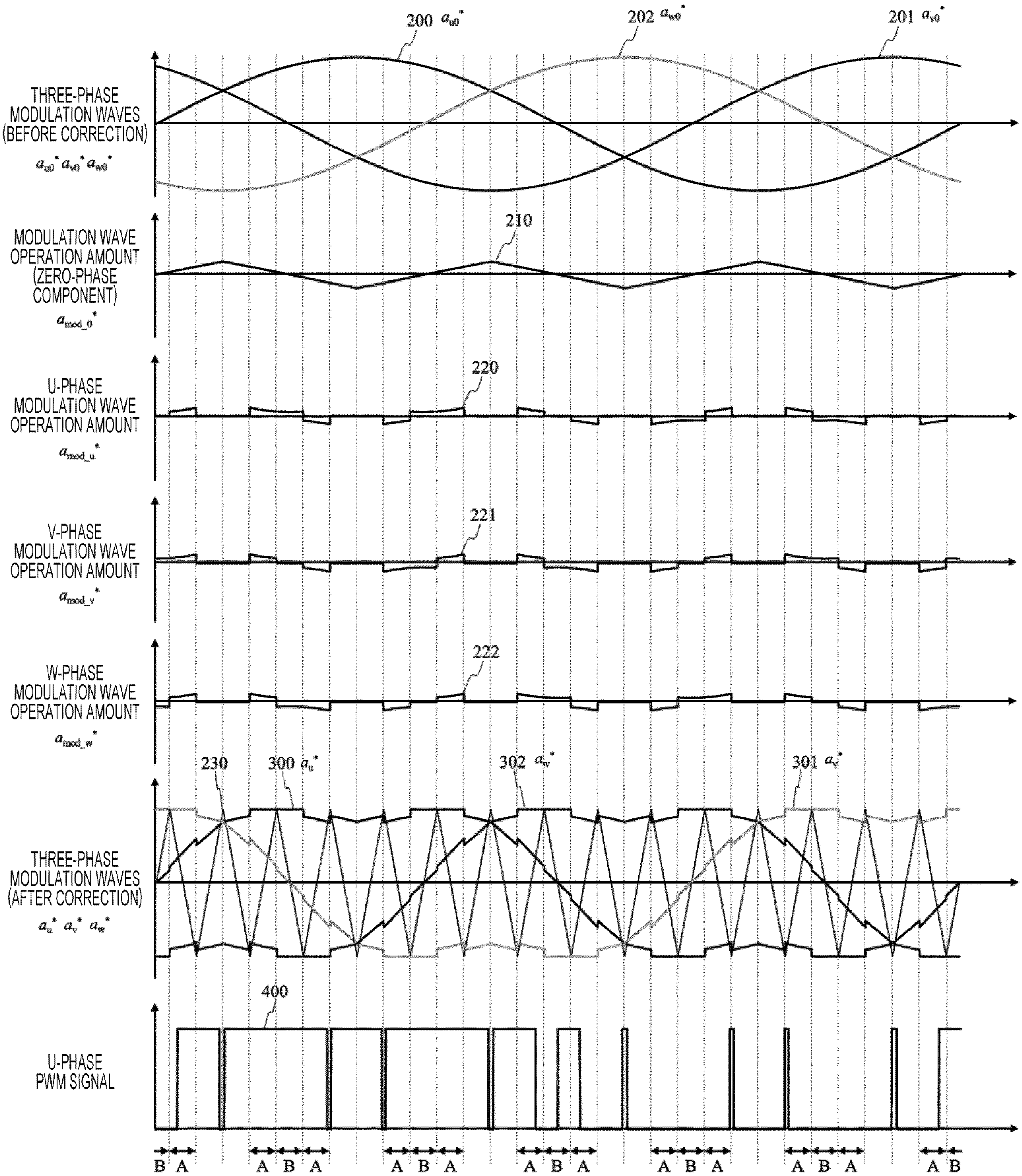

200 $a_{u0}^*$
202 $a_{w0}^*$
201 $a_{v0}^*$
THREE-PHASE MODULATION WAVES (BEFORE CORRECTION)
$a_{u0}^*$ $a_{v0}^*$ $a_{w0}^*$
210
MODULATION WAVE OPERATION AMOUNT (ZERO-PHASE COMPONENT)
$a_{mod_0}^*$
220
U-PHASE MODULATION WAVE OPERATION AMOUNT
$a_{mod_u}^*$
221
V-PHASE MODULATION WAVE OPERATION AMOUNT
$a_{mod_v}^*$
222
W-PHASE MODULATION WAVE OPERATION AMOUNT
$a_{mod_w}^*$
230
300 $a_u^*$
302 $a_w^*$
301 $a_v^*$
THREE-PHASE MODULATION WAVES (AFTER CORRECTION)
$a_u^*$ $a_v^*$ $a_w^*$
400
U-PHASE PWM SIGNAL
B A A B A A B A A B A A B A A B A A B

FIG. 2

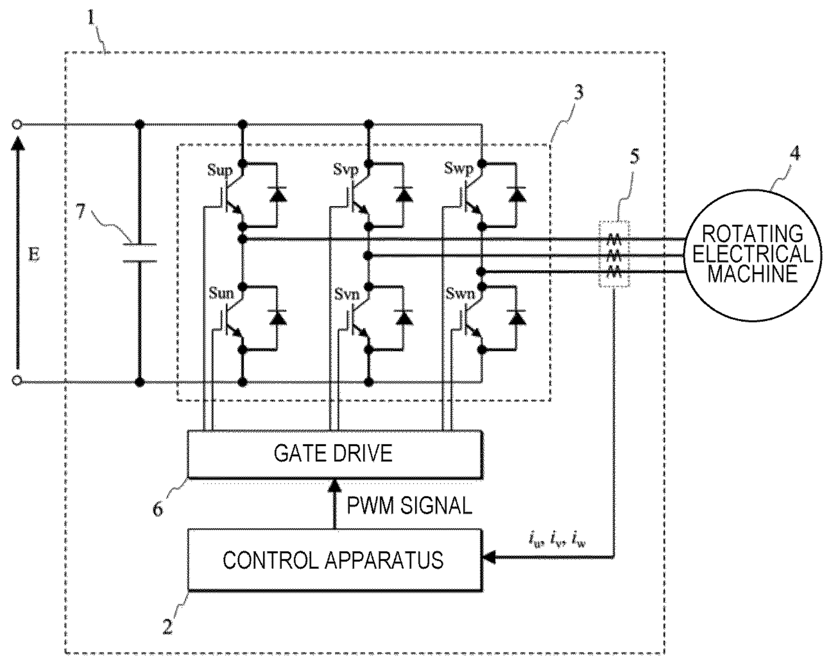
1
3
5
4
Sup
Svp
Swp
Sun
Svn
Swn
7
E
ROTATING ELECTRICAL MACHINE
GATE DRIVE
6
PWM SIGNAL
$i_u$, $i_v$, $i_w$
CONTROL APPARATUS
2

FIG. 3

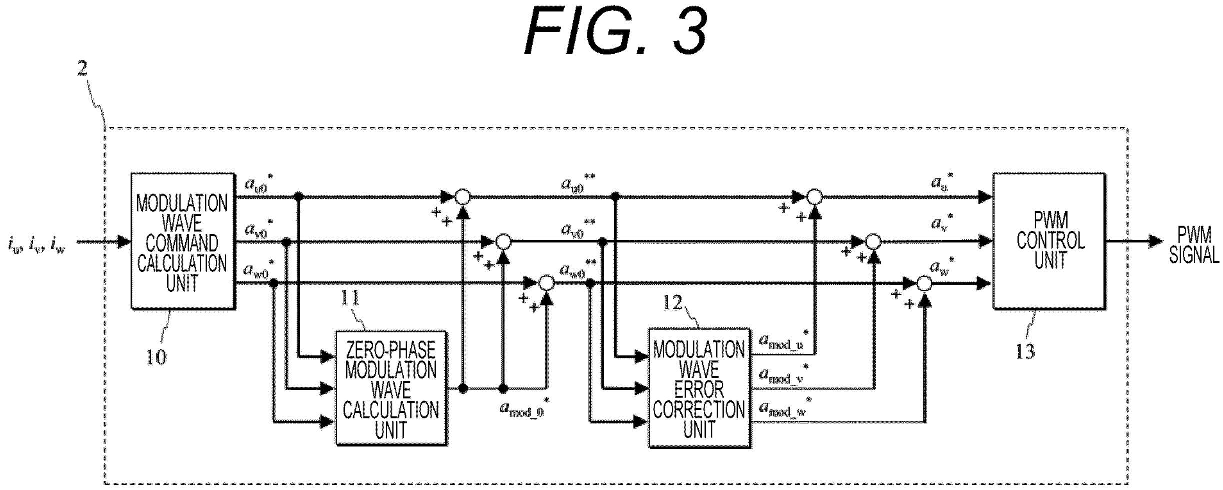
2
$i_u$, $i_v$, $i_w$
MODULATION WAVE COMMAND CALCULATION UNIT
10
$a_{u0}^*$
$a_{v0}^*$
$a_{w0}^*$
11
ZERO-PHASE MODULATION WAVE CALCULATION UNIT
$a_{mod_0}^*$
$a_{u0}^{**}$
$a_{v0}^{**}$
$a_{w0}^{**}$
12
MODULATION WAVE ERROR CORRECTION UNIT
$a_{mod_u}^*$
$a_{mod_v}^*$
$a_{mod_w}^*$
$a_u^*$
$a_v^*$
$a_w^*$
PWM CONTROL UNIT
13
PWM SIGNAL

FIG. 4

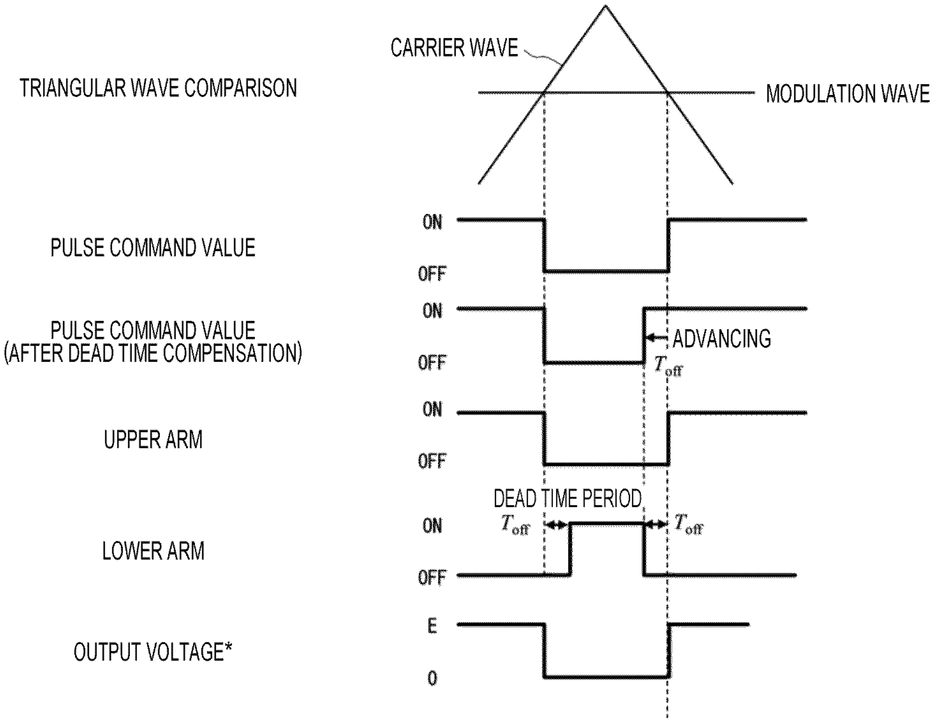
CARRIER WAVE
TRIANGULAR WAVE COMPARISON
MODULATION WAVE
PULSE COMMAND VALUE
ON
OFF
PULSE COMMAND VALUE
(AFTER DEAD TIME COMPENSATION)
ADVANCING
$T_{off}$
UPPER ARM
DEAD TIME PERIOD
$T_{off}$
$T_{off}$
LOWER ARM
OUTPUT VOLTAGE*
E
0

FIG. 5

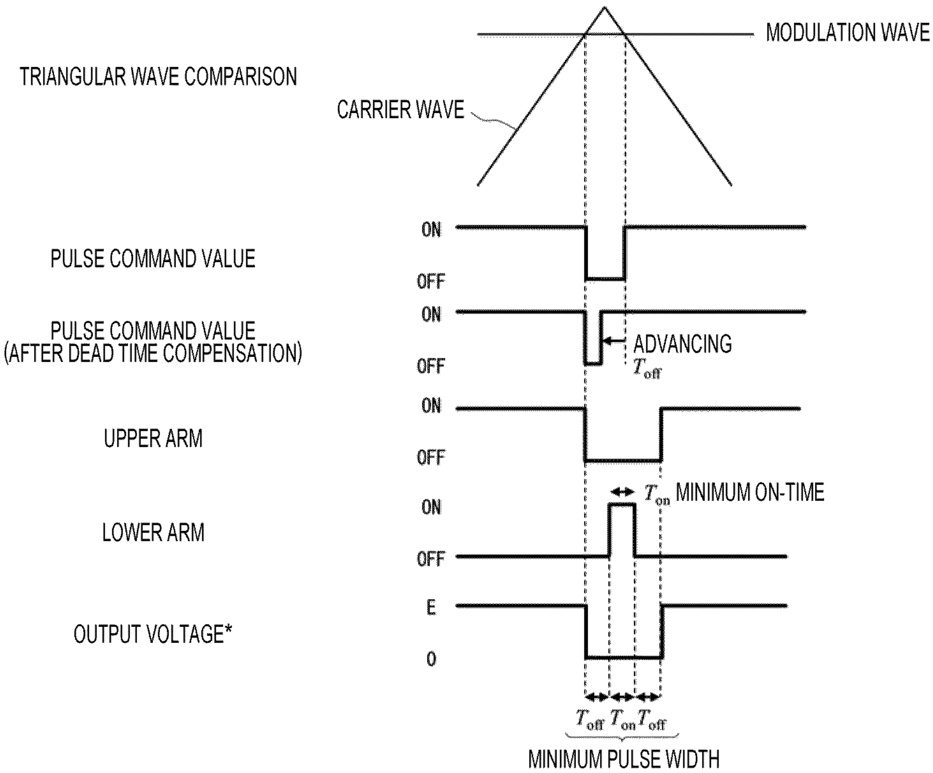
MODULATION WAVE
TRIANGULAR WAVE COMPARISON
CARRIER WAVE
PULSE COMMAND VALUE
ON
OFF
PULSE COMMAND VALUE
(AFTER DEAD TIME COMPENSATION)
ADVANCING
$T_{off}$
UPPER ARM
$T_{on}$ MINIMUM ON-TIME
LOWER ARM
OUTPUT VOLTAGE*
E
0
$T_{off}$ $T_{on}$ $T_{off}$
MINIMUM PULSE WIDTH

# FIG. 6

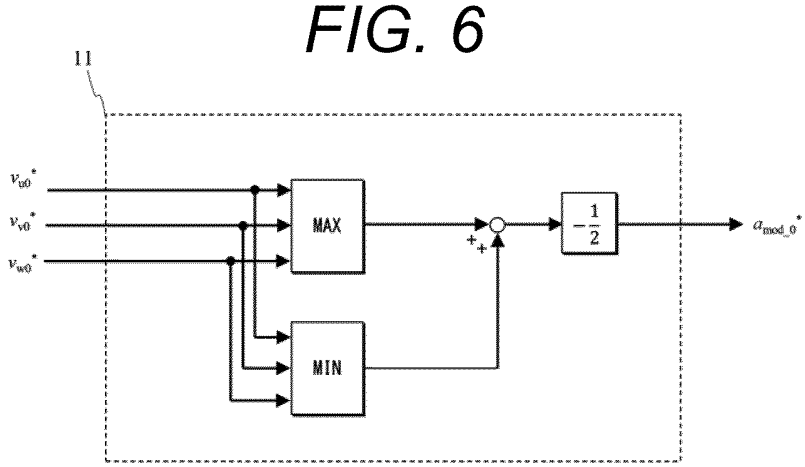
11
$v_{u0}^*$
$v_{v0}^*$
$v_{w0}^*$
MAX
MIN
+
+
$-\frac{1}{2}$
$a_{mod_0}^*$

# FIG. 7

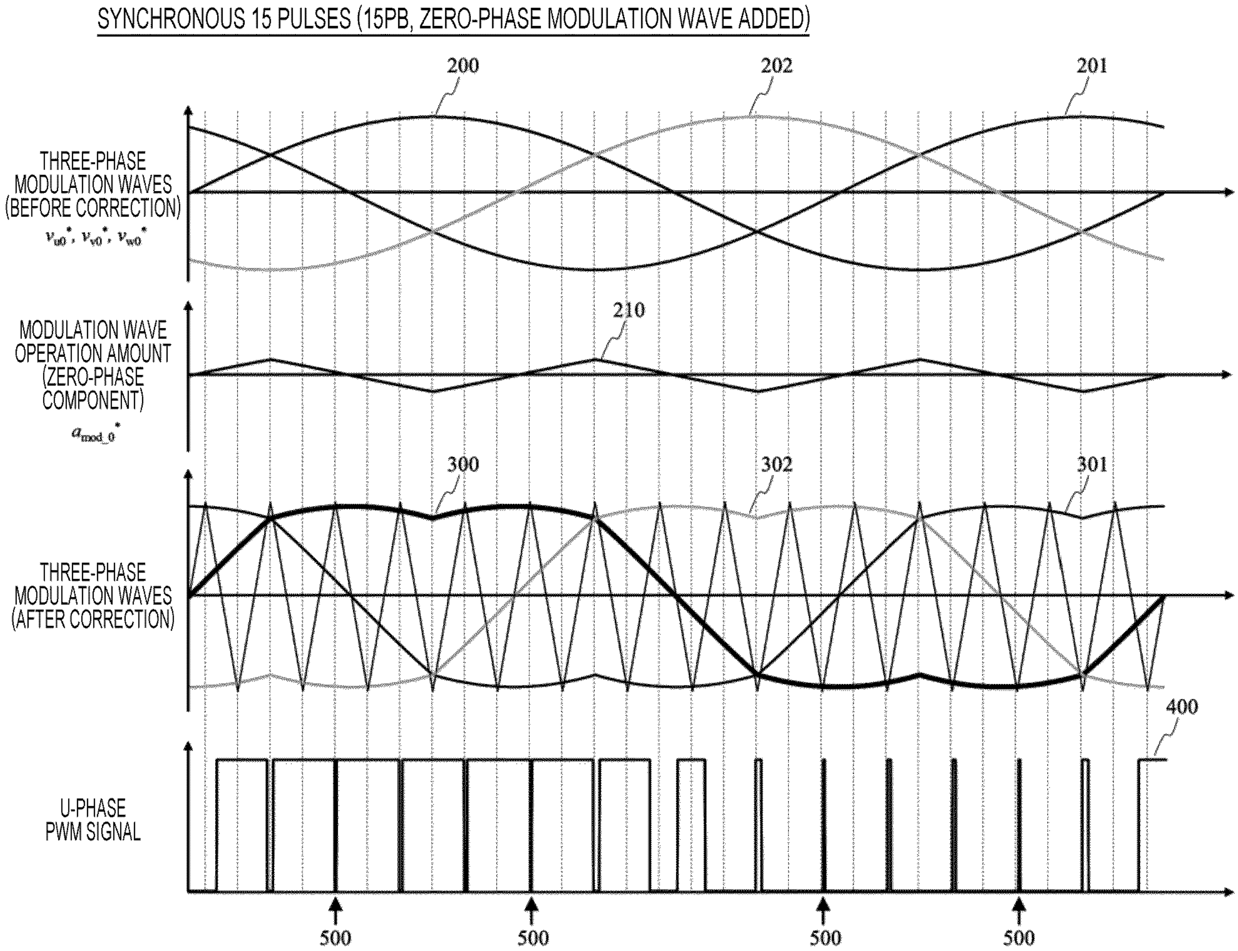
SYNCHRONOUS 15 PULSES (15PB, ZERO-PHASE MODULATION WAVE ADDED)
200
202
201
THREE-PHASE MODULATION WAVES (BEFORE CORRECTION)
$v_{u0}^*$, $v_{v0}^*$, $v_{w0}^*$
210
MODULATION WAVE OPERATION AMOUNT (ZERO-PHASE COMPONENT)
$a_{mod_0}^*$
300
302
301
THREE-PHASE MODULATION WAVES (AFTER CORRECTION)
400
U-PHASE PWM SIGNAL
500
500
500
500

FIG. 8

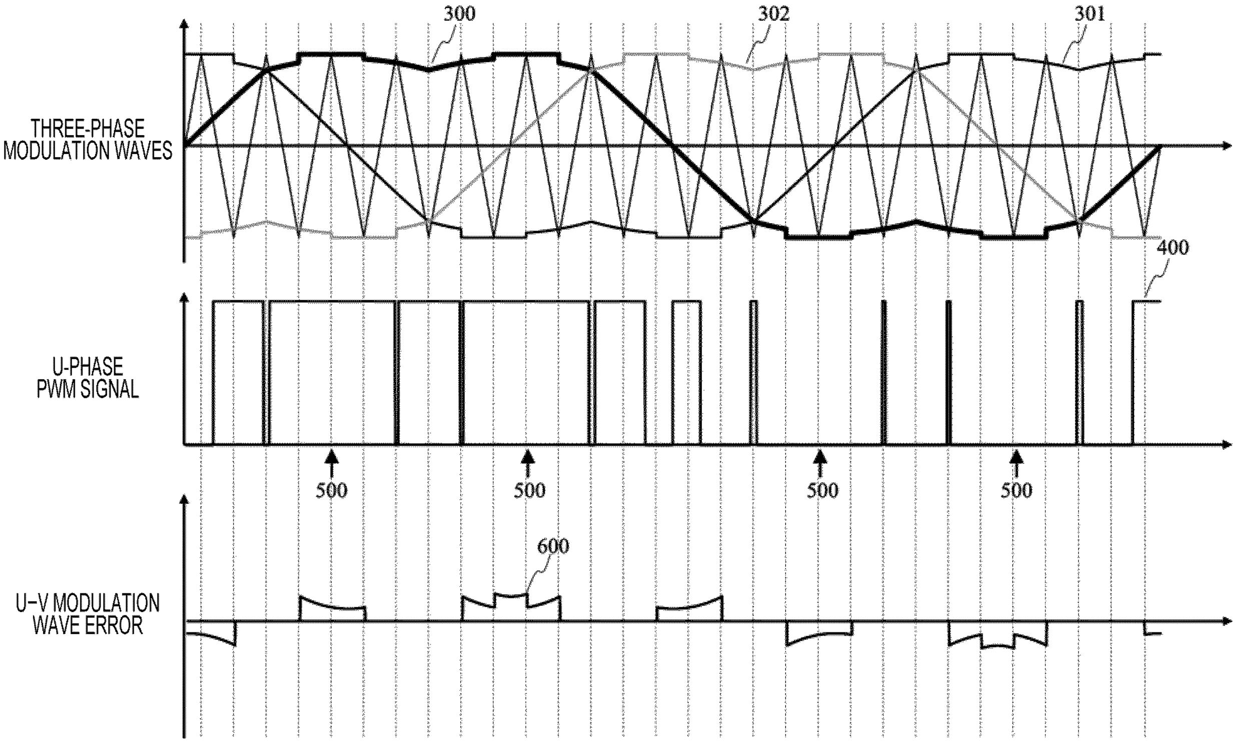


FIG. 9

SYNCHRONOUS 11 PULSES (15PB, MODULATION WAVE OPERATION AMOUNT ADDED)

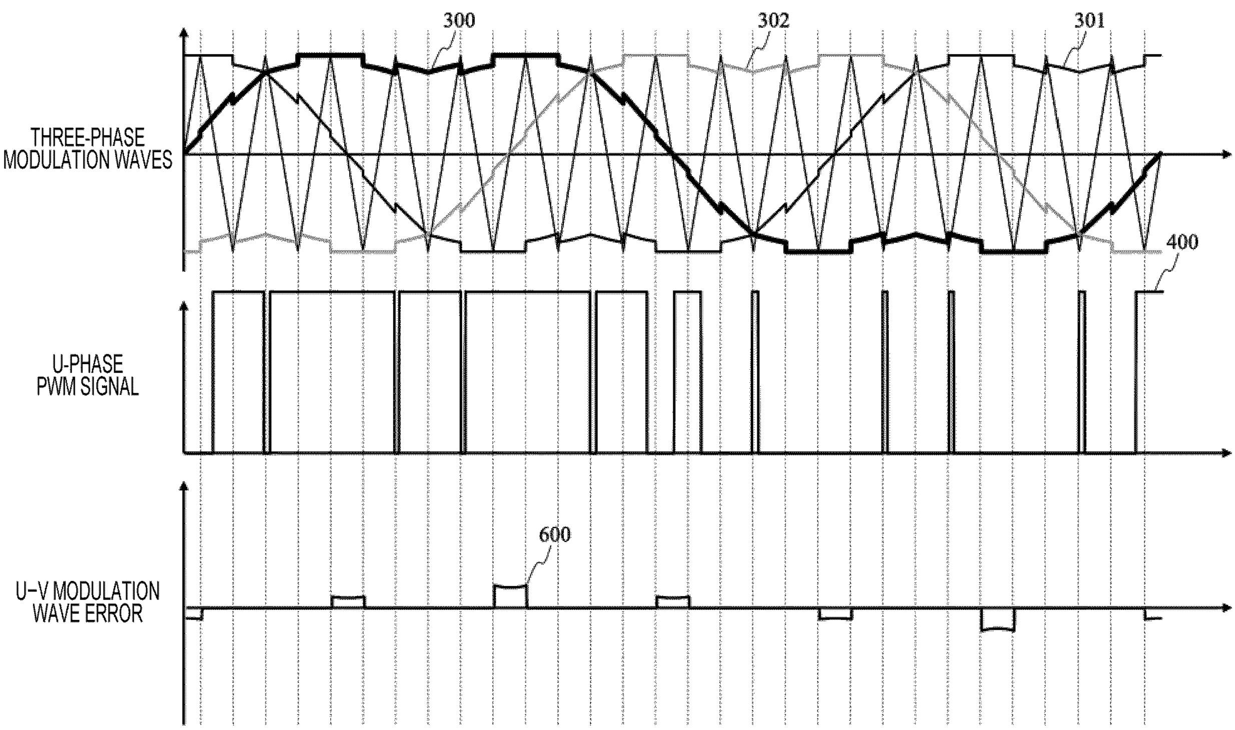

FIG. 10

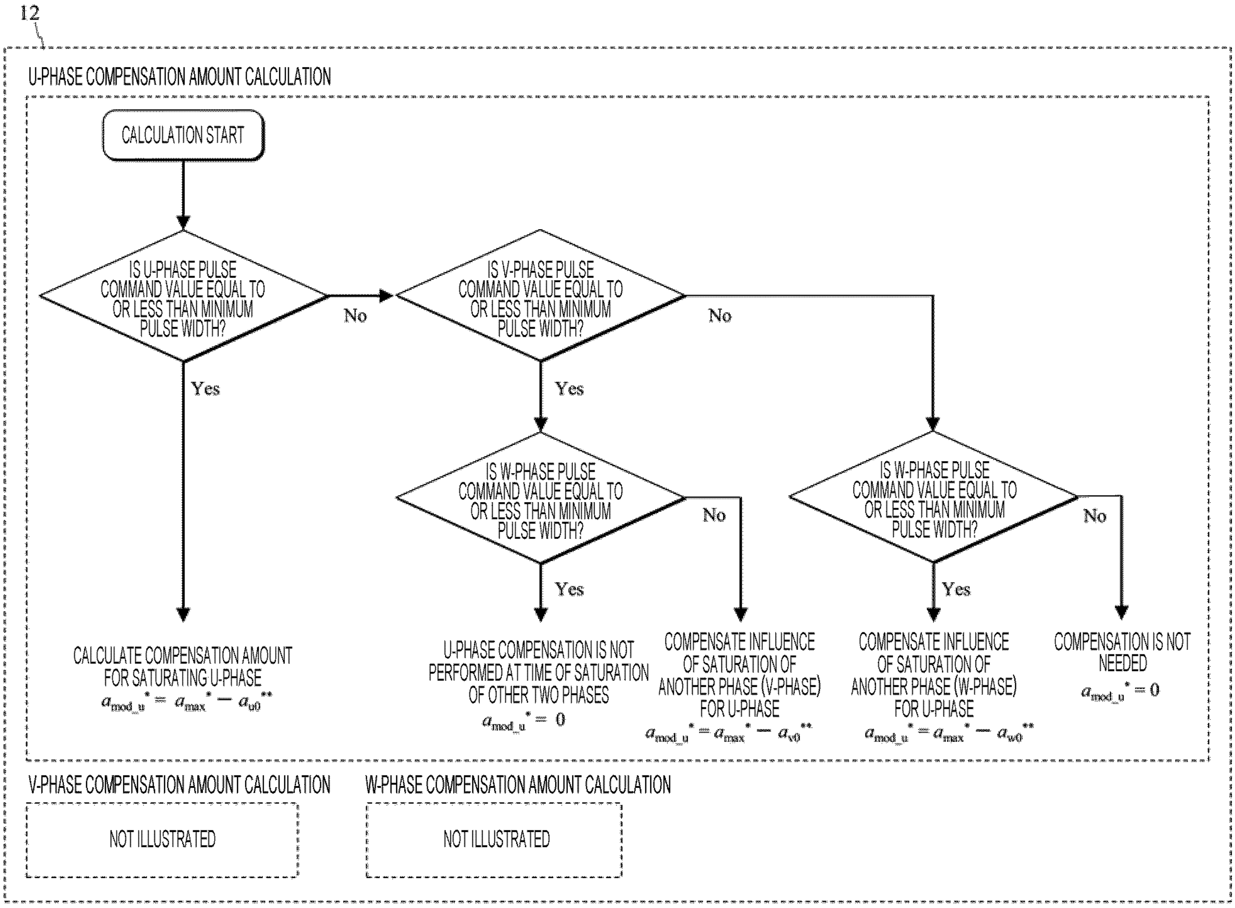
12
U-PHASE COMPENSATION AMOUNT CALCULATION
CALCULATION START
IS U-PHASE PULSE COMMAND VALUE EQUAL TO OR LESS THAN MINIMUM PULSE WIDTH?
No
IS V-PHASE PULSE COMMAND VALUE EQUAL TO OR LESS THAN MINIMUM PULSE WIDTH?
No
Yes
Yes
IS W-PHASE PULSE COMMAND VALUE EQUAL TO OR LESS THAN MINIMUM PULSE WIDTH?
No
IS W-PHASE PULSE COMMAND VALUE EQUAL TO OR LESS THAN MINIMUM PULSE WIDTH?
No
Yes
Yes
CALCULATE COMPENSATION AMOUNT FOR SATURATING U-PHASE
$a_{mod_u}^* = a_{max}^* - a_{u0}^{**}$
U-PHASE COMPENSATION IS NOT PERFORMED AT TIME OF SATURATION OF OTHER TWO PHASES
$a_{mod_u}^* = 0$
COMPENSATE INFLUENCE OF SATURATION OF ANOTHER PHASE (V-PHASE) FOR U-PHASE
$a_{mod_u}^* = a_{max}^* - a_{v0}^{**}$
COMPENSATE INFLUENCE OF SATURATION OF ANOTHER PHASE (W-PHASE) FOR U-PHASE
$a_{mod_u}^* = a_{max}^* - a_{w0}^{**}$
COMPENSATION IS NOT NEEDED
$a_{mod_u}^* = 0$
V-PHASE COMPENSATION AMOUNT CALCULATION
NOT ILLUSTRATED
W-PHASE COMPENSATION AMOUNT CALCULATION
NOT ILLUSTRATED

FIG. 11

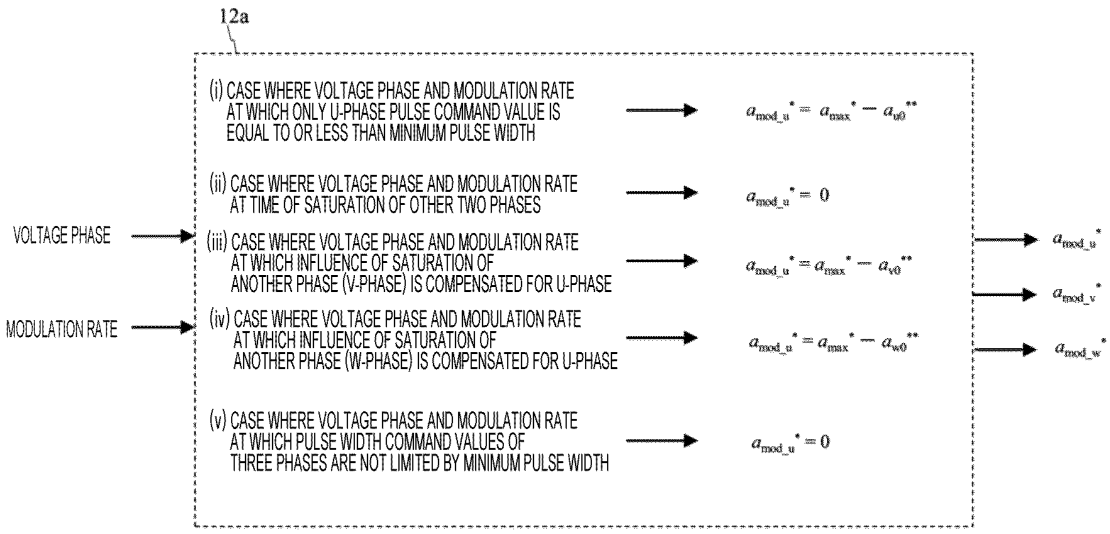
12a
VOLTAGE PHASE
MODULATION RATE
(i) CASE WHERE VOLTAGE PHASE AND MODULATION RATE AT WHICH ONLY U-PHASE PULSE COMMAND VALUE IS EQUAL TO OR LESS THAN MINIMUM PULSE WIDTH
$a_{mod_u}^* = a_{max}^* - a_{u0}^{**}$
(ii) CASE WHERE VOLTAGE PHASE AND MODULATION RATE AT TIME OF SATURATION OF OTHER TWO PHASES
$a_{mod_u}^* = 0$
(iii) CASE WHERE VOLTAGE PHASE AND MODULATION RATE AT WHICH INFLUENCE OF SATURATION OF ANOTHER PHASE (V-PHASE) IS COMPENSATED FOR U-PHASE
$a_{mod_u}^* = a_{max}^* - a_{v0}^{**}$
(iv) CASE WHERE VOLTAGE PHASE AND MODULATION RATE AT WHICH INFLUENCE OF SATURATION OF ANOTHER PHASE (W-PHASE) IS COMPENSATED FOR U-PHASE
$a_{mod_u}^* = a_{max}^* - a_{w0}^{**}$
(v) CASE WHERE VOLTAGE PHASE AND MODULATION RATE AT WHICH PULSE WIDTH COMMAND VALUES OF THREE PHASES ARE NOT LIMITED BY MINIMUM PULSE WIDTH
$a_{mod_u}^* = 0$
$a_{mod_u}^*$
$a_{mod_v}^*$
$a_{mod_w}^*$

# FIG. 12

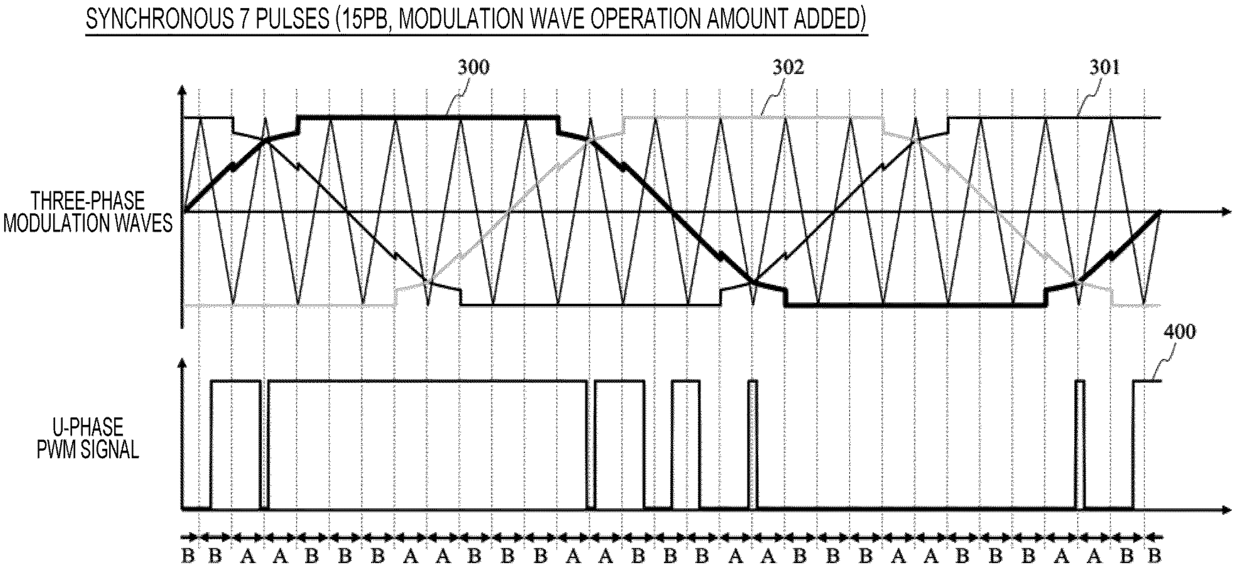
SYNCHRONOUS 7 PULSES (15PB, MODULATION WAVE OPERATION AMOUNT ADDED)
300
302
301
THREE-PHASE MODULATION WAVES
400
U-PHASE PWM SIGNAL
B B A A B B B A A B B B A A B B B A A B B B A A B B B A A B B

# FIG. 13

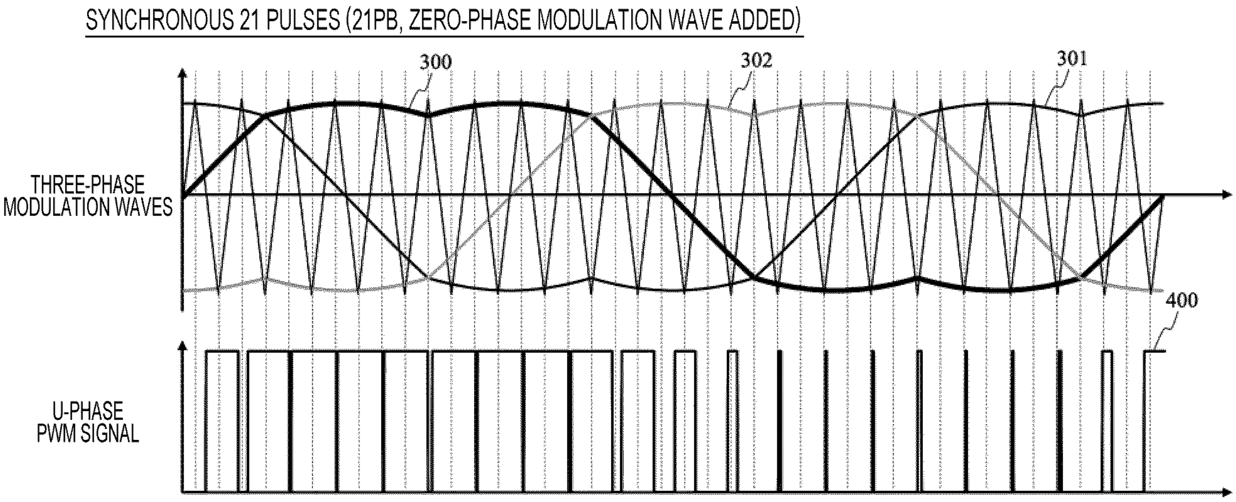
SYNCHRONOUS 21 PULSES (21PB, ZERO-PHASE MODULATION WAVE ADDED)
300
302
301
THREE-PHASE MODULATION WAVES
400
U-PHASE PWM SIGNAL

# FIG. 14

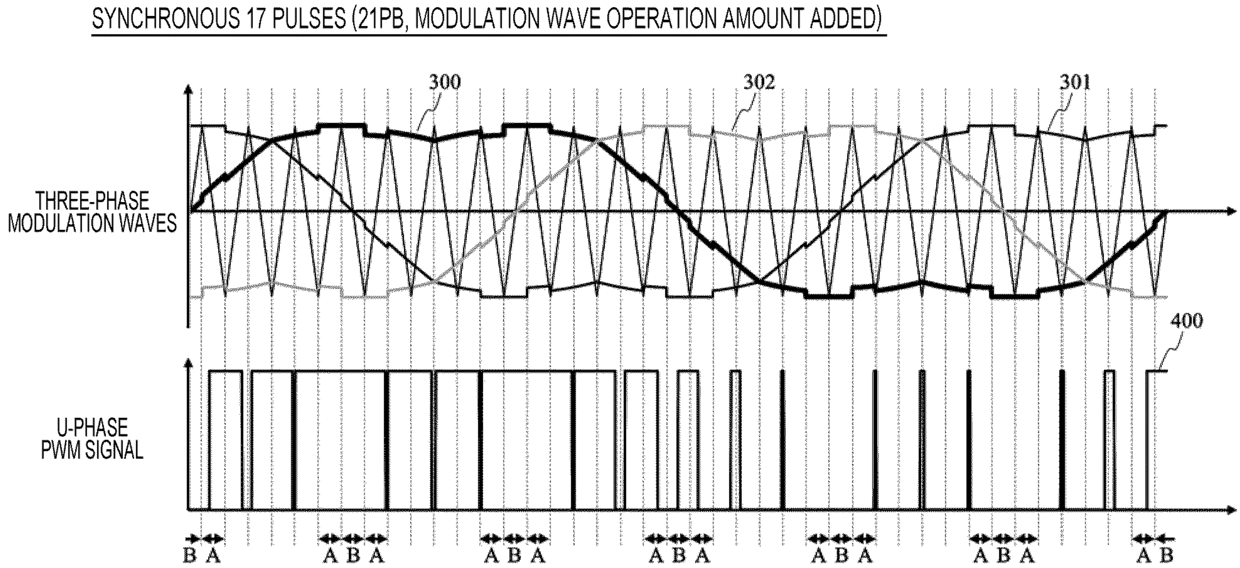
SYNCHRONOUS 17 PULSES (21PB, MODULATION WAVE OPERATION AMOUNT ADDED)
300
302
301
THREE-PHASE MODULATION WAVES
400
U-PHASE PWM SIGNAL
B A
A B A
A B A
A B A
A B A
A B A
A B

# FIG. 15

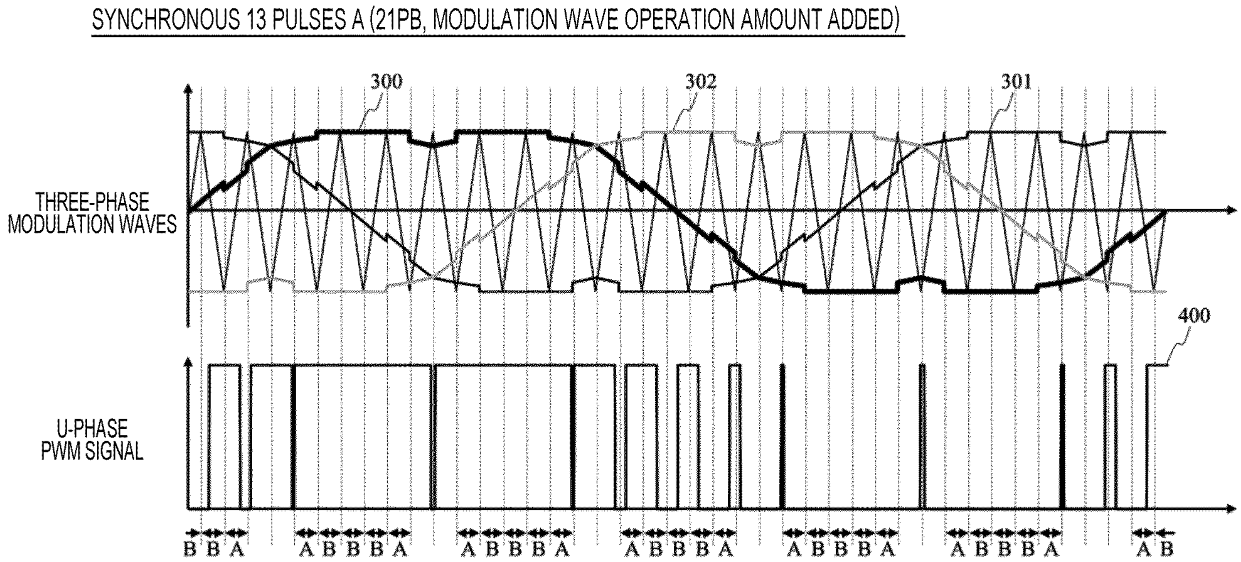
SYNCHRONOUS 13 PULSES A (21PB, MODULATION WAVE OPERATION AMOUNT ADDED)
300
302
301
THREE-PHASE MODULATION WAVES
400
U-PHASE PWM SIGNAL
B B A
A B B B A
A B B B A
A B B B A
A B B B A
A B B B A
A B

FIG. 16

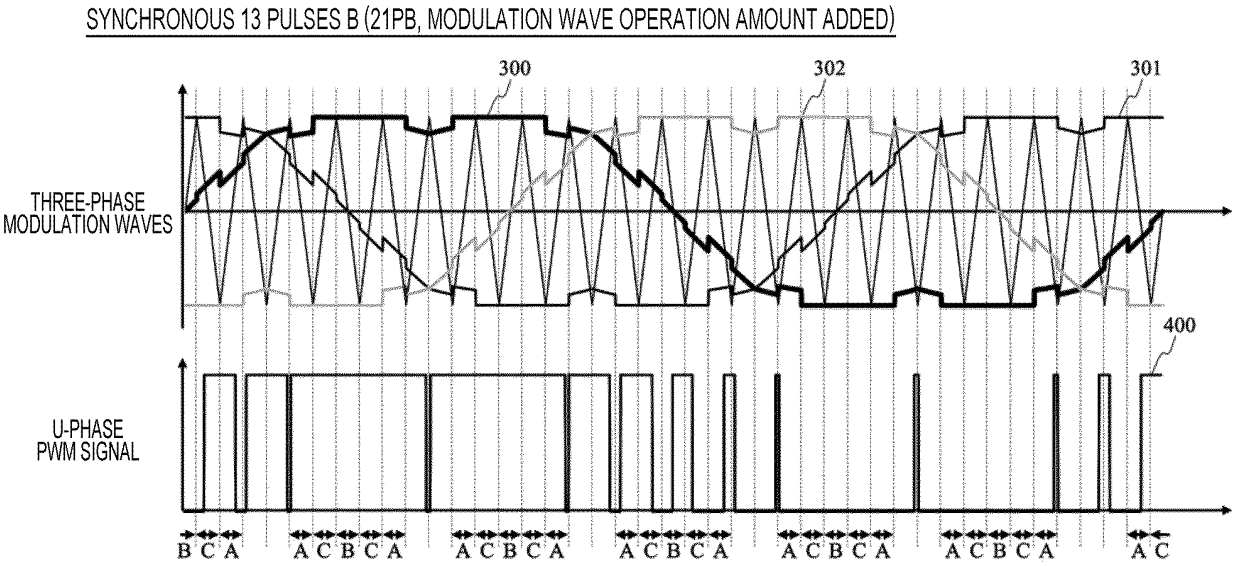
SYNCHRONOUS 13 PULSES B (21PB, MODULATION WAVE OPERATION AMOUNT ADDED)
300
302
301
THREE-PHASE MODULATION WAVES
400
U-PHASE PWM SIGNAL
B C A A C B C A A C B C A A C B C A A C B C A A C B C A A C

FIG. 17

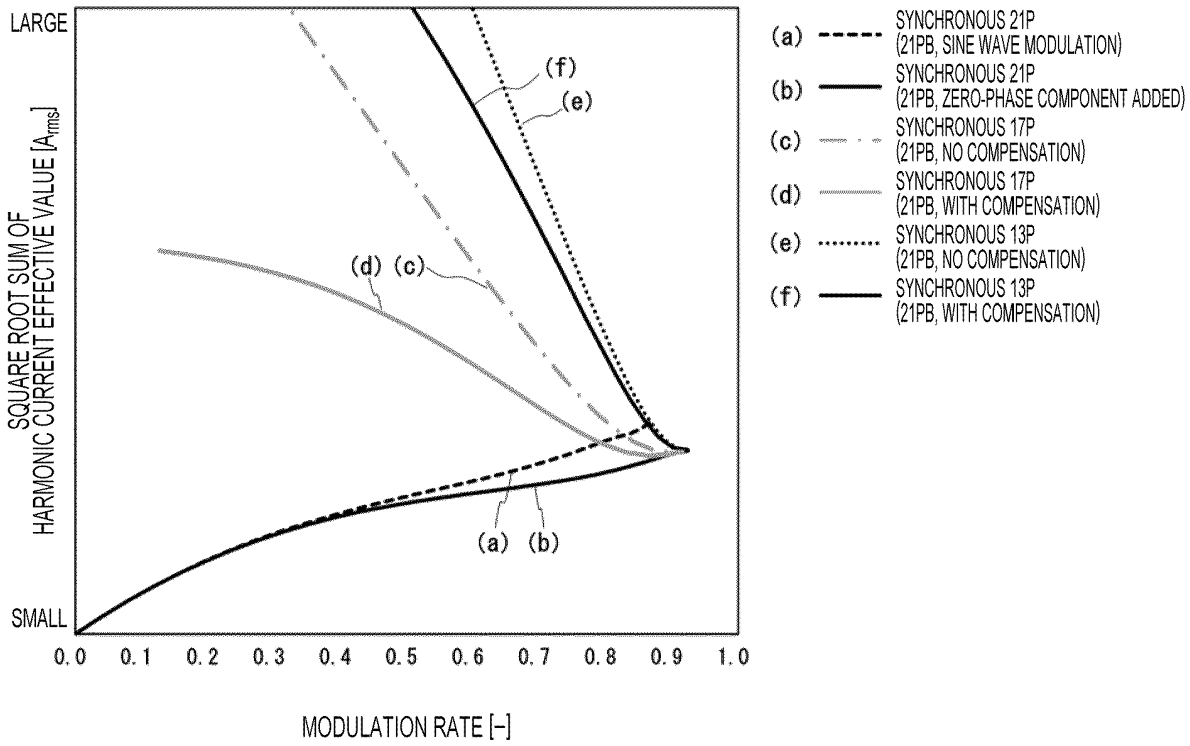
LARGE
SMALL
SQUARE ROOT SUM OF HARMONIC CURRENT EFFECTIVE VALUE [Arms]
0.0 0.1 0.2 0.3 0.4 0.5 0.6 0.7 0.8 0.9 1.0
MODULATION RATE [-]
(a) (b) (c) (d) (e) (f)
(a) SYNCHRONOUS 21P (21PB, SINE WAVE MODULATION)
(b) SYNCHRONOUS 21P (21PB, ZERO-PHASE COMPONENT ADDED)
(c) SYNCHRONOUS 17P (21PB, NO COMPENSATION)
(d) SYNCHRONOUS 17P (21PB, WITH COMPENSATION)
(e) SYNCHRONOUS 13P (21PB, NO COMPENSATION)
(f) SYNCHRONOUS 13P (21PB, WITH COMPENSATION)

# FIG. 18

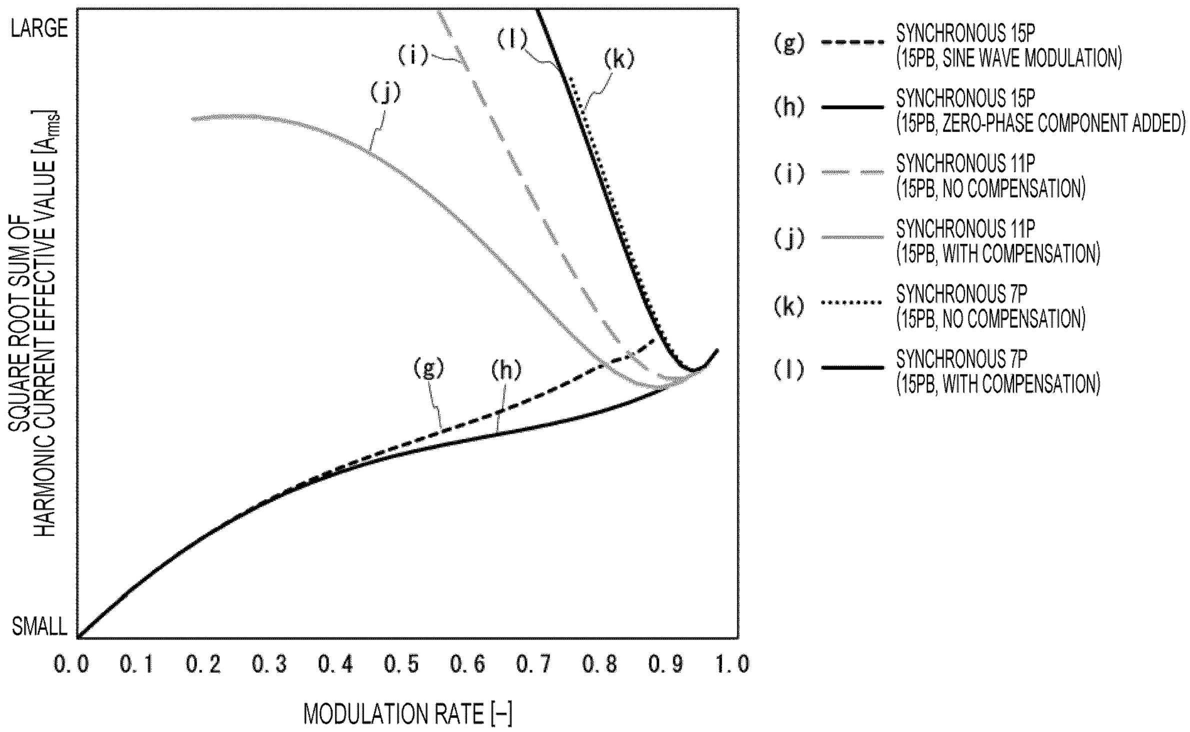
LARGE
SMALL
SQUARE ROOT SUM OF HARMONIC CURRENT EFFECTIVE VALUE [$A_{rms}$]
0.0 0.1 0.2 0.3 0.4 0.5 0.6 0.7 0.8 0.9 1.0
MODULATION RATE [-]
(i)
(l)
(k)
(j)
(g)
(h)
(g) SYNCHRONOUS 15P (15PB, SINE WAVE MODULATION)
(h) SYNCHRONOUS 15P (15PB, ZERO-PHASE COMPONENT ADDED)
(i) SYNCHRONOUS 11P (15PB, NO COMPENSATION)
(j) SYNCHRONOUS 11P (15PB, WITH COMPENSATION)
(k) SYNCHRONOUS 7P (15PB, NO COMPENSATION)
(l) SYNCHRONOUS 7P (15PB, WITH COMPENSATION)

# FIG. 19

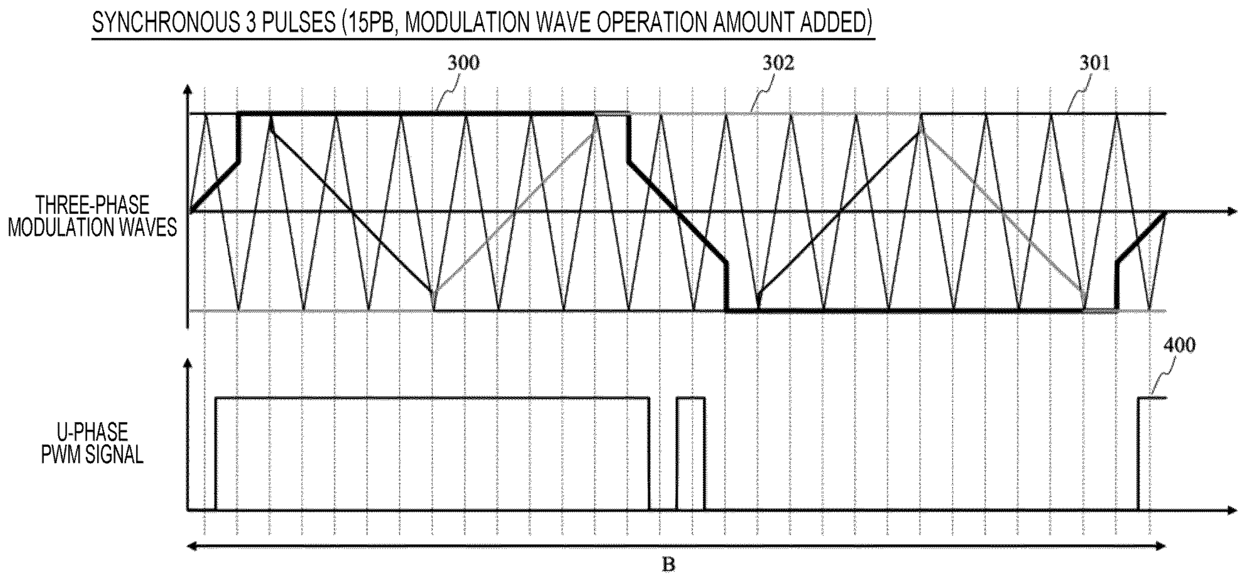
SYNCHRONOUS 3 PULSES (15PB, MODULATION WAVE OPERATION AMOUNT ADDED)
300
302
301
THREE-PHASE MODULATION WAVES
400
U-PHASE PWM SIGNAL
B

# FIG. 20

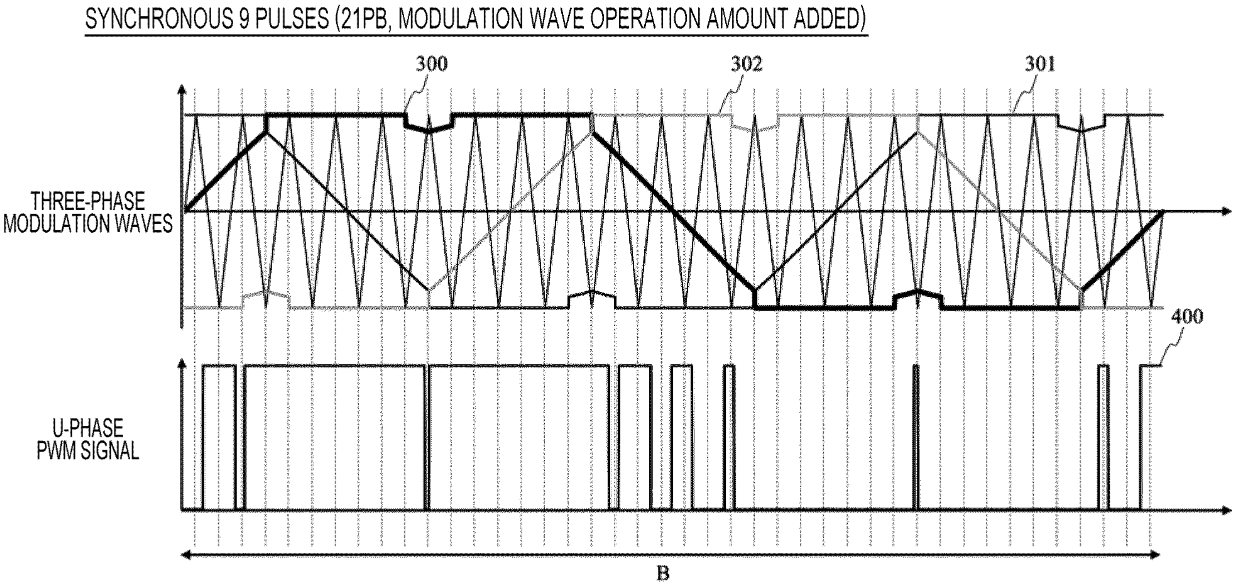
SYNCHRONOUS 9 PULSES (21PB, MODULATION WAVE OPERATION AMOUNT ADDED)
300
302
301
THREE-PHASE MODULATION WAVES
400
U-PHASE PWM SIGNAL
B

# FIG. 21

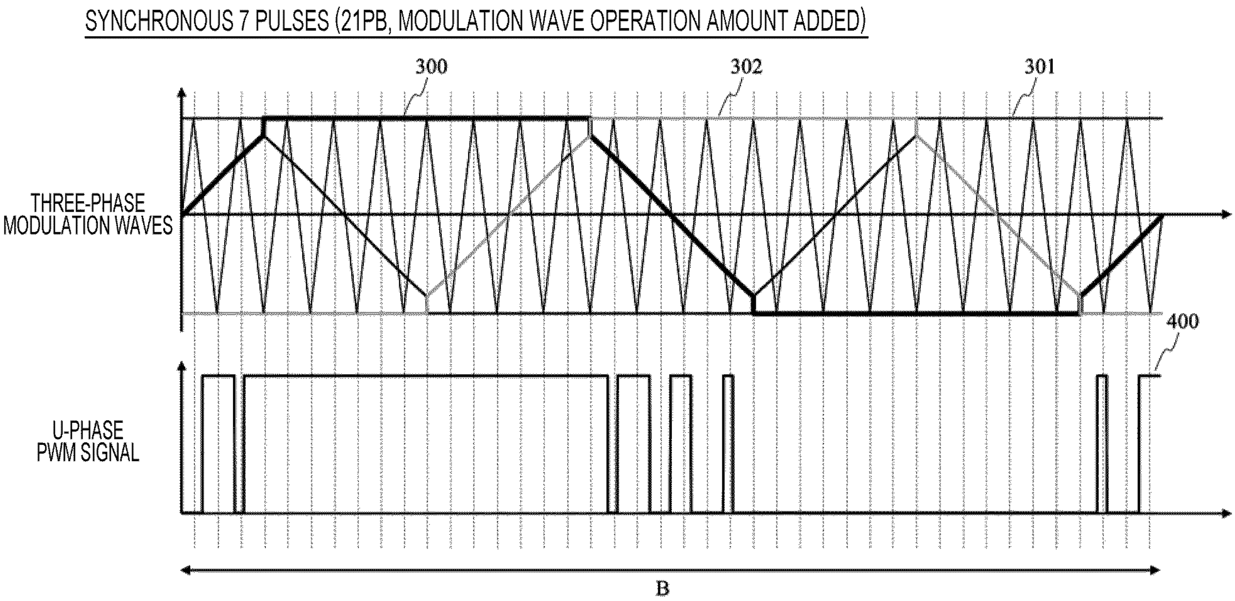
SYNCHRONOUS 7 PULSES (21PB, MODULATION WAVE OPERATION AMOUNT ADDED)
300
302
301
THREE-PHASE MODULATION WAVES
400
U-PHASE PWM SIGNAL
B

FIG. 22

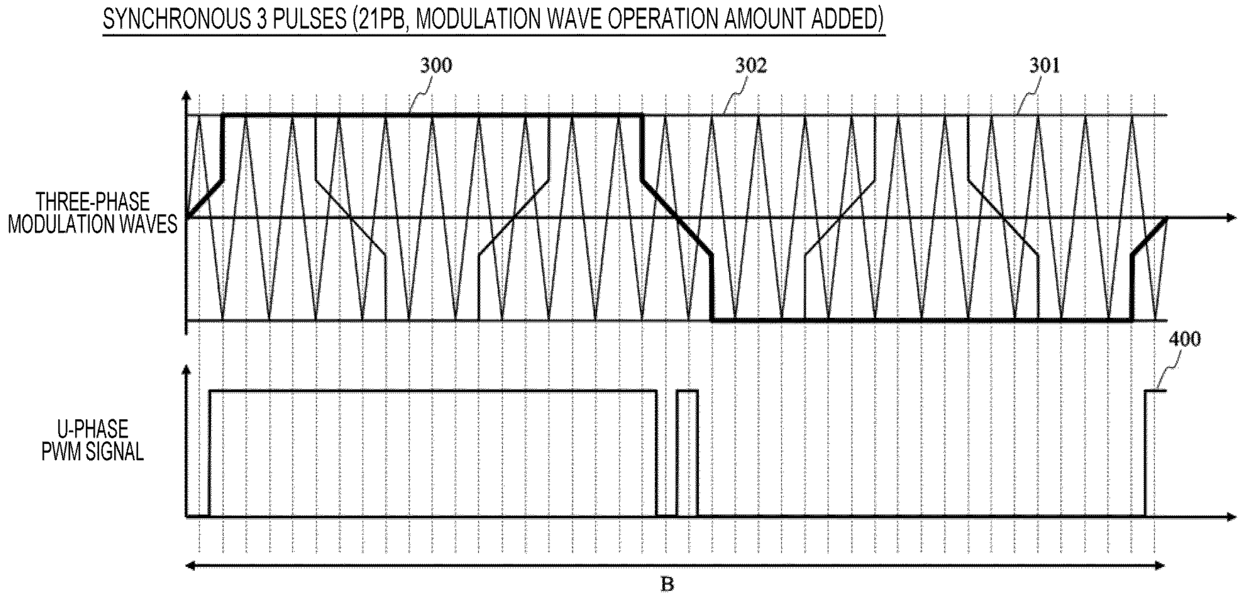
SYNCHRONOUS 3 PULSES (21PB, MODULATION WAVE OPERATION AMOUNT ADDED)
300
302
301
THREE-PHASE MODULATION WAVES
400
U-PHASE PWM SIGNAL
B

FIG. 23

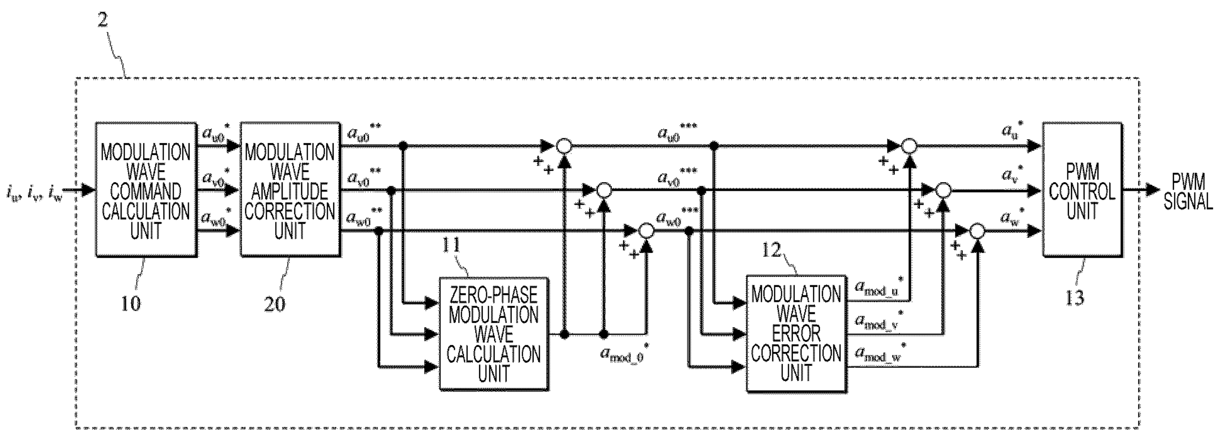
2
$i_u$, $i_v$, $i_w$
MODULATION WAVE COMMAND CALCULATION UNIT
10
$a_{u0}^*$
$a_{v0}^*$
$a_{w0}^*$
MODULATION WAVE AMPLITUDE CORRECTION UNIT
20
$a_{u0}^{**}$
$a_{v0}^{**}$
$a_{w0}^{**}$
11
ZERO-PHASE MODULATION WAVE CALCULATION UNIT
$a_{mod_0}^*$
$a_{u0}^{***}$
$a_{v0}^{***}$
$a_{w0}^{***}$
12
MODULATION WAVE ERROR CORRECTION UNIT
$a_{mod_u}^*$
$a_{mod_v}^*$
$a_{mod_w}^*$
$a_u^*$
$a_v^*$
$a_w^*$
PWM CONTROL UNIT
13
PWM SIGNAL

FIG. 24

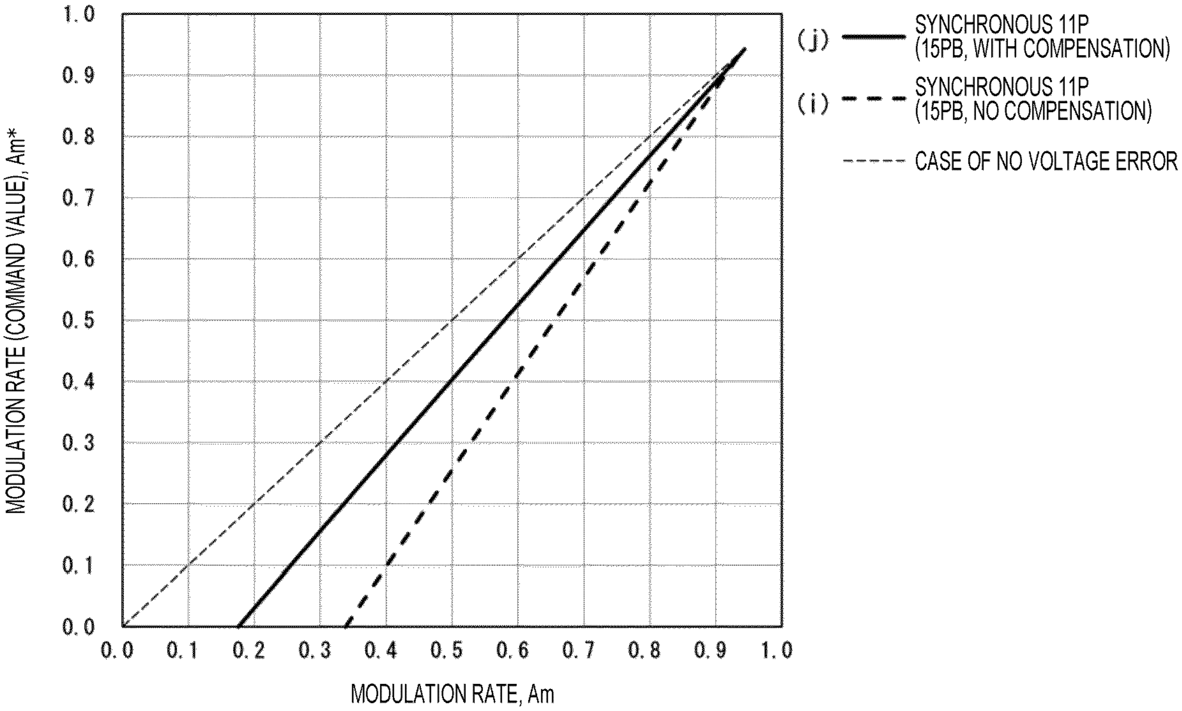
1.0
0.9
0.8
0.7
0.6
0.5
0.4
0.3
0.2
0.1
0.0
MODULATION RATE (COMMAND VALUE), Am*
0.0 0.1 0.2 0.3 0.4 0.5 0.6 0.7 0.8 0.9 1.0
MODULATION RATE, Am
(j) SYNCHRONOUS 11P (15PB, WITH COMPENSATION)
(i) SYNCHRONOUS 11P (15PB, NO COMPENSATION)
CASE OF NO VOLTAGE ERROR

FIG. 25

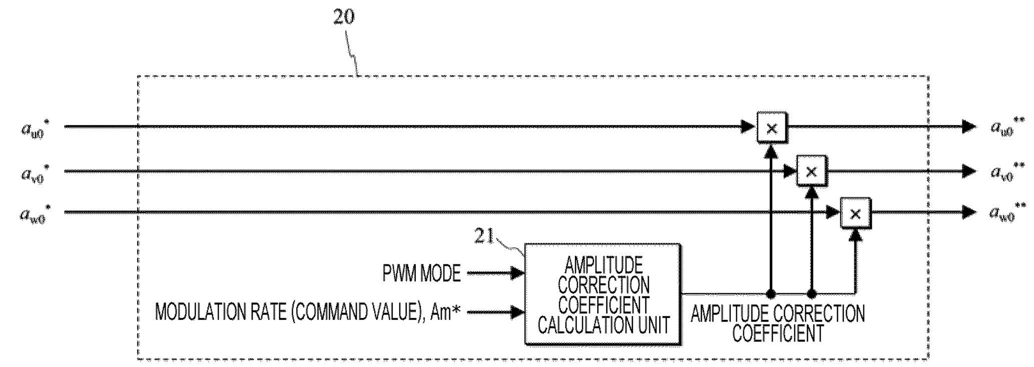
20
$a_{u0}^*$
$a_{v0}^*$
$a_{w0}^*$
×
×
×
$a_{u0}^{**}$
$a_{v0}^{**}$
$a_{w0}^{**}$
21
PWM MODE
MODULATION RATE (COMMAND VALUE), Am*
AMPLITUDE CORRECTION COEFFICIENT CALCULATION UNIT
AMPLITUDE CORRECTION COEFFICIENT

FIG. 26

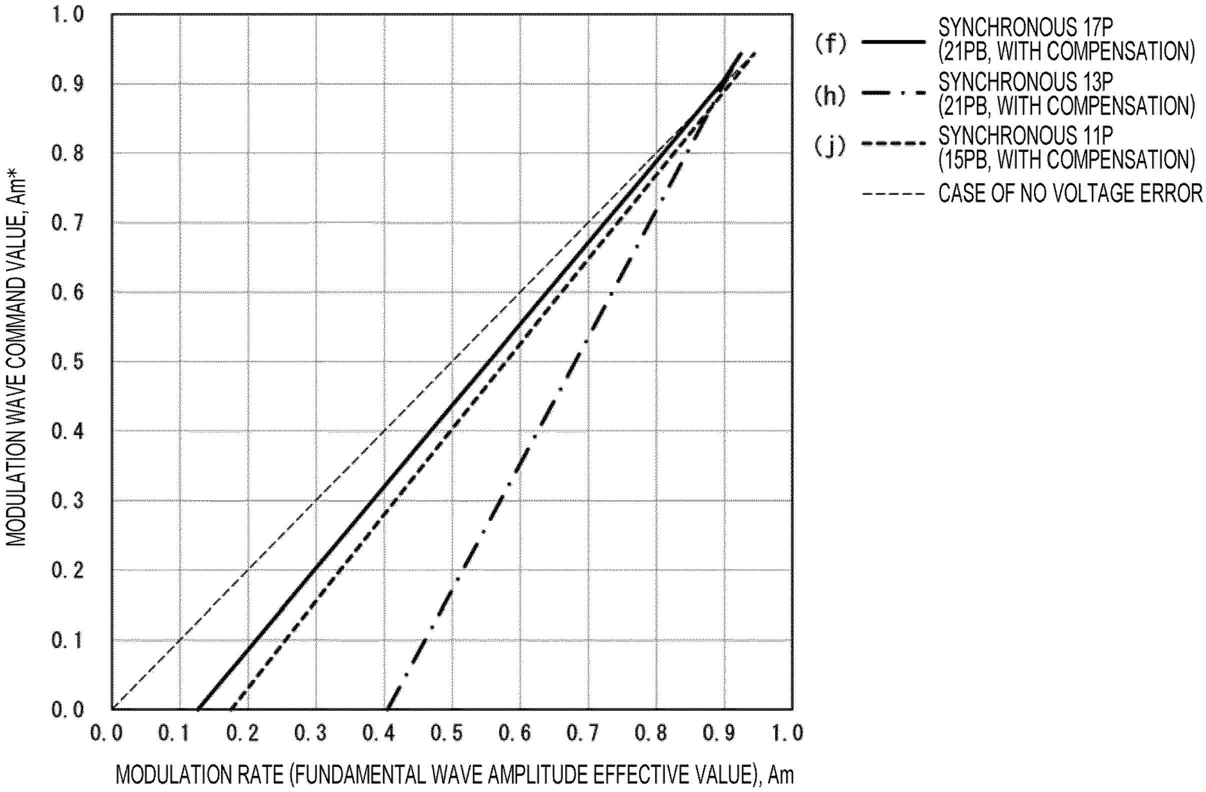
1.0
0.9
0.8
0.7
0.6
0.5
0.4
0.3
0.2
0.1
0.0
MODULATION WAVE COMMAND VALUE, Am*
0.0 0.1 0.2 0.3 0.4 0.5 0.6 0.7 0.8 0.9 1.0
MODULATION RATE (FUNDAMENTAL WAVE AMPLITUDE EFFECTIVE VALUE), Am
(f) SYNCHRONOUS 17P (21PB, WITH COMPENSATION)
(h) SYNCHRONOUS 13P (21PB, WITH COMPENSATION)
(j) SYNCHRONOUS 11P (15PB, WITH COMPENSATION)
CASE OF NO VOLTAGE ERROR

FIG. 27

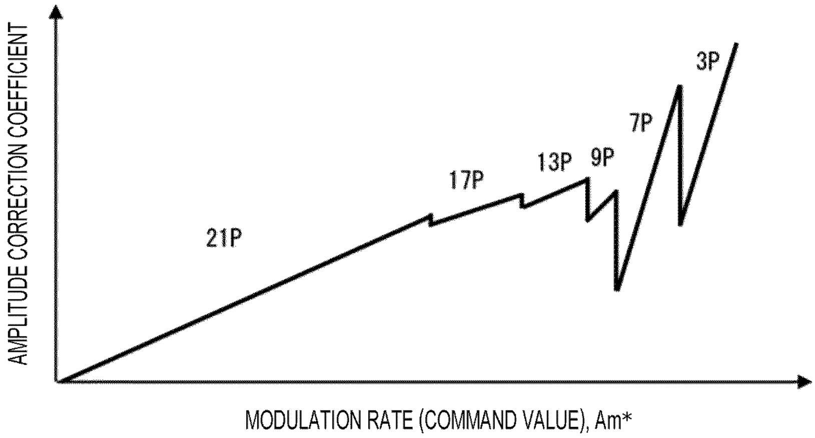
AMPLITUDE CORRECTION COEFFICIENT
21P
17P
13P
9P
7P
3P
MODULATION RATE (COMMAND VALUE), Am*

FIG. 28

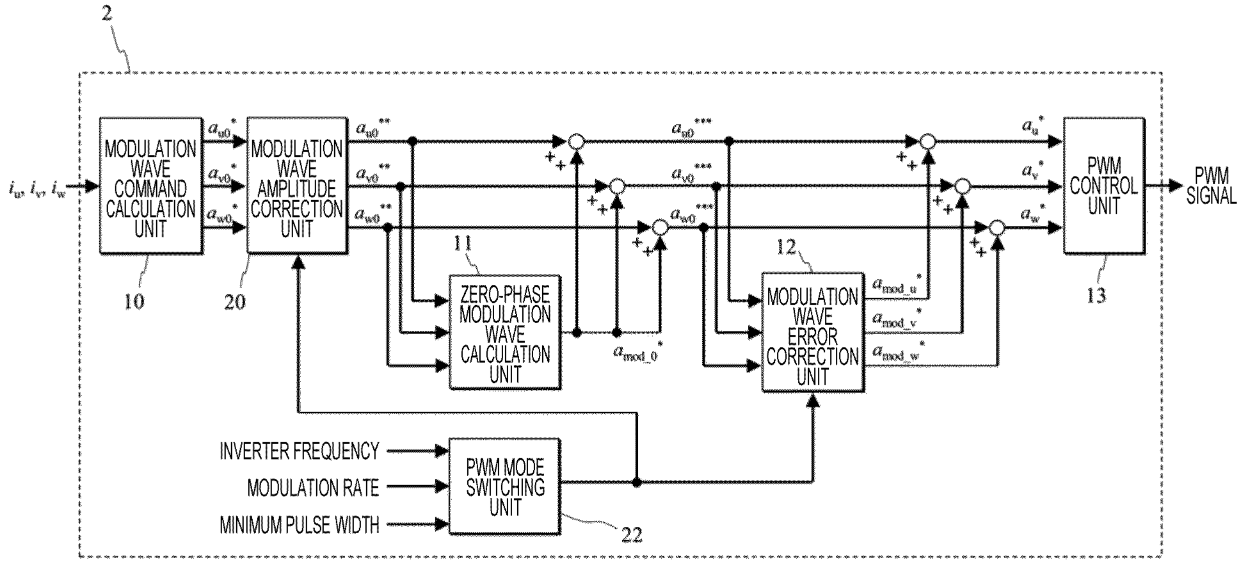
2
MODULATION WAVE COMMAND CALCULATION UNIT
MODULATION WAVE AMPLITUDE CORRECTION UNIT
ZERO-PHASE MODULATION WAVE CALCULATION UNIT
MODULATION WAVE ERROR CORRECTION UNIT
PWM CONTROL UNIT
PWM SIGNAL
PWM MODE SWITCHING UNIT
INVERTER FREQUENCY
MODULATION RATE
MINIMUM PULSE WIDTH
10
20
11
12
13
22

FIG. 29

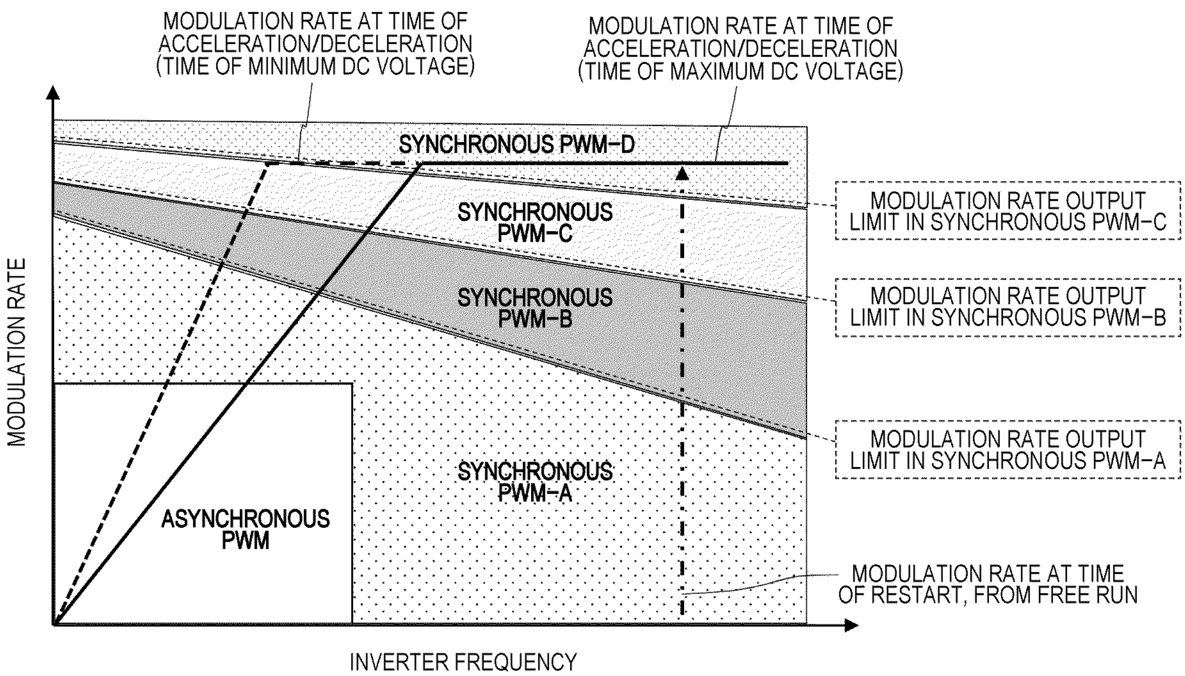
MODULATION RATE AT TIME OF ACCELERATION/DECELERATION (TIME OF MINIMUM DC VOLTAGE)
MODULATION RATE AT TIME OF ACCELERATION/DECELERATION (TIME OF MAXIMUM DC VOLTAGE)
SYNCHRONOUS PWM-D
SYNCHRONOUS PWM-C
SYNCHRONOUS PWM-B
SYNCHRONOUS PWM-A
ASYNCHRONOUS PWM
MODULATION RATE OUTPUT LIMIT IN SYNCHRONOUS PWM-C
MODULATION RATE OUTPUT LIMIT IN SYNCHRONOUS PWM-B
MODULATION RATE OUTPUT LIMIT IN SYNCHRONOUS PWM-A
MODULATION RATE AT TIME OF RESTART, FROM FREE RUN
MODULATION RATE
INVERTER FREQUENCY

FIG. 30

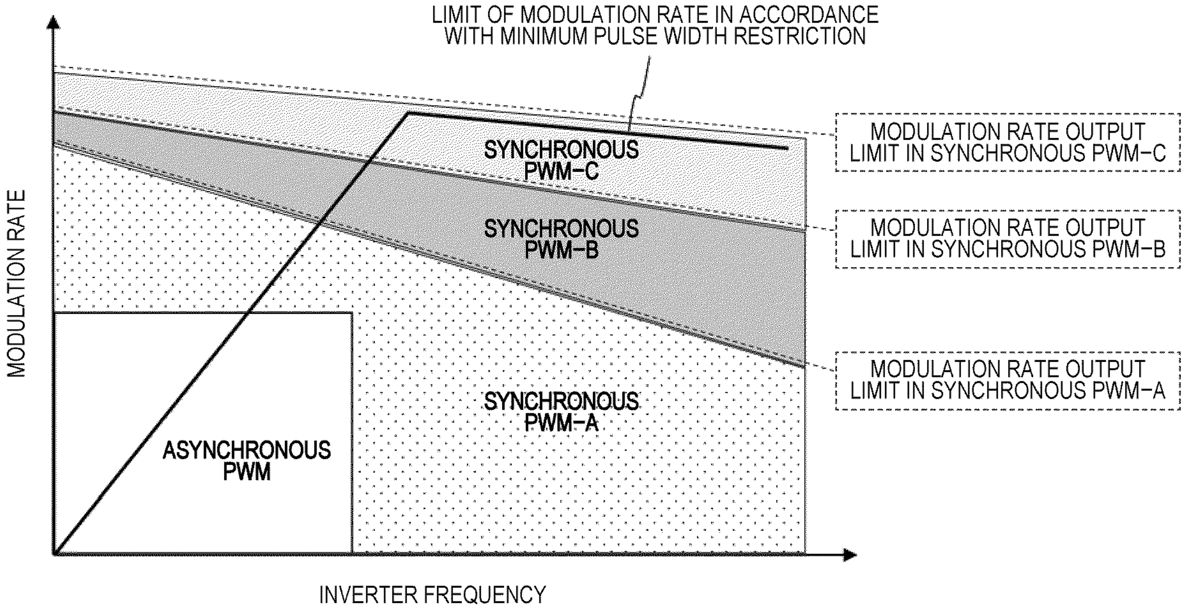
LIMIT OF MODULATION RATE IN ACCORDANCE WITH MINIMUM PULSE WIDTH RESTRICTION
MODULATION RATE
SYNCHRONOUS PWM-C
SYNCHRONOUS PWM-B
SYNCHRONOUS PWM-A
ASYNCHRONOUS PWM
MODULATION RATE OUTPUT LIMIT IN SYNCHRONOUS PWM-C
MODULATION RATE OUTPUT LIMIT IN SYNCHRONOUS PWM-B
MODULATION RATE OUTPUT LIMIT IN SYNCHRONOUS PWM-A
INVERTER FREQUENCY

FIG. 31

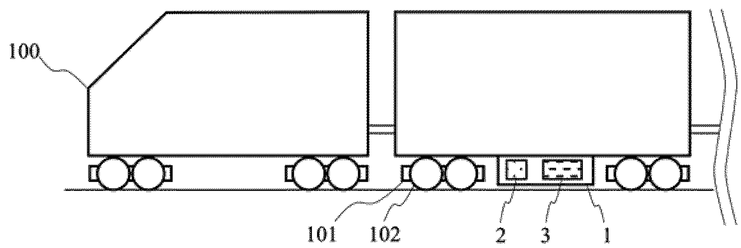
100
101
102
2
3
1

# FIG. 32

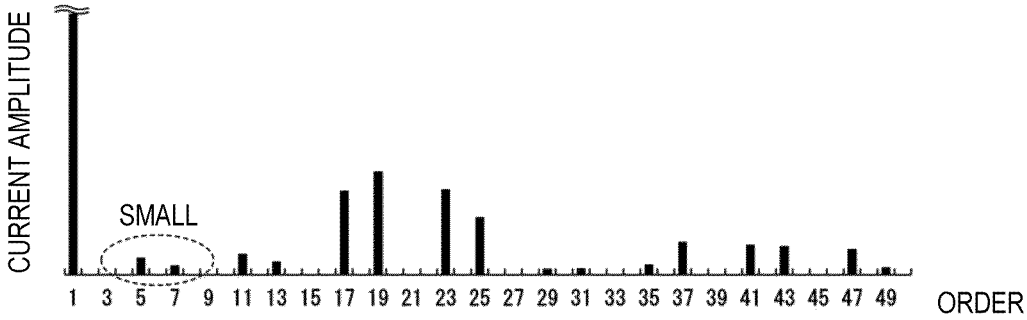


(a) SYNCHRONOUS 21 PULSES (21PB)

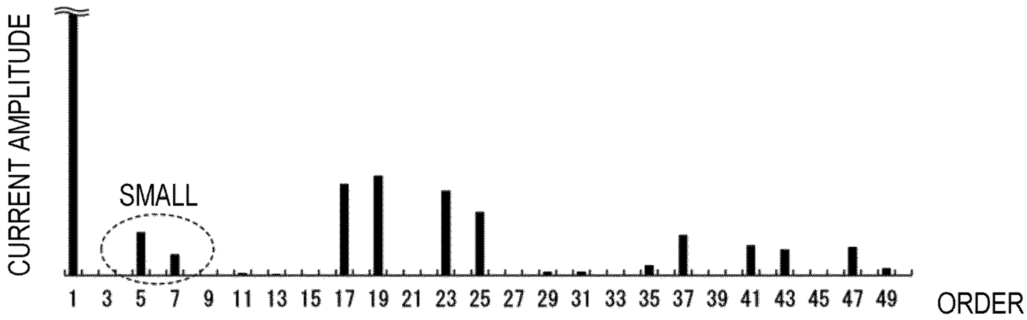


(b) SYNCHRONOUS 17 PULSES (21PB)

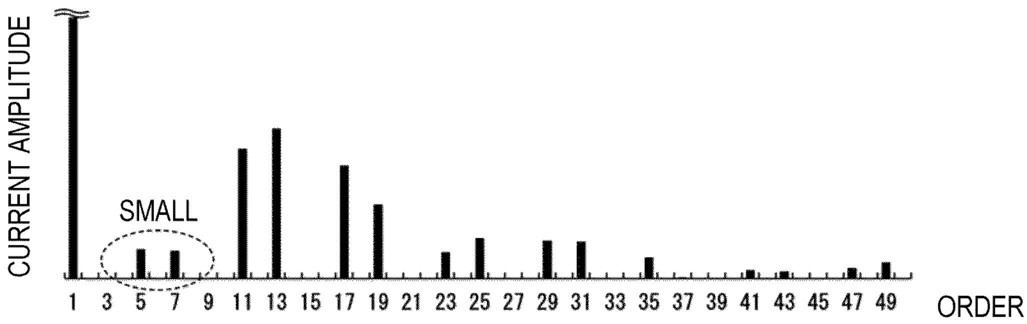


(c) SYNCHRONOUS 15 PULSES (15PB)

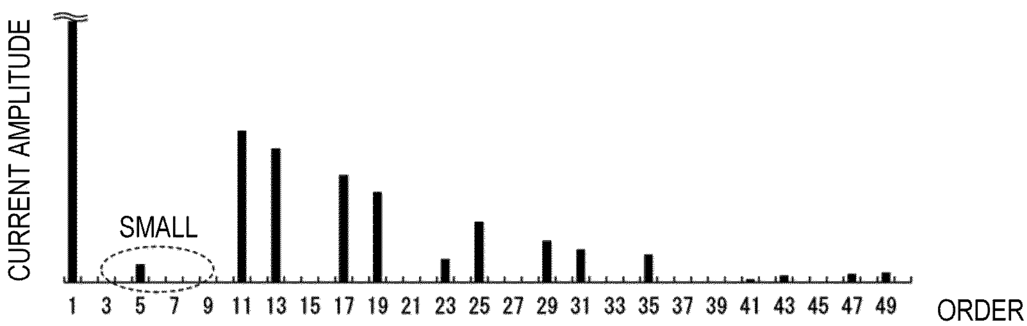


(d) SYNCHRONOUS 11 PULSES (15PB)

## INTERNATIONAL SEARCH REPORT

International application No.
**PCT/JP2023/026761**

**A. CLASSIFICATION OF SUBJECT MATTER**

***H02P 27/08***(2006.01)i; ***H02M 7/48***(2007.01)i
FI: H02P27/08; H02M7/48 F

According to International Patent Classification (IPC) or to both national classification and IPC

**B. FIELDS SEARCHED**

Minimum documentation searched (classification system followed by classification symbols)

H02P27/08; H02M7/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-211818 A (HITACHI, LTD.) 20 October 2011 (2011-10-20) paragraphs [0001]-[0053], fig. 1-16 | 1-10 |
| A | JP 2012-65481 A (HITACHI, LTD.) 29 March 2012 (2012-03-29) paragraphs [0001]-[0052], fig. 1-5 | 1-10 |
| A | WO 2007/125826 A1 (MATSUSHITA ELECTRIC INDUSTRIAL CO., LTD.) 08 November 2007 (2007-11-08) paragraphs [0001]-[0113], fig. 1-14 | 1-10 |
| A | JP 2006-20381 A (HITACHI, LTD.) 19 January 2006 (2006-01-19) paragraphs [0001]-[0154], fig. 1-11 | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 August 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/026761**

| Patent document cited in search report | Publication date (day/month/year) | Patent family member(s) | Publication date (day/month/year) |
|---|---|---|---|
| JP 2011-211818 A | 20 October 2011 | (Family: none) | |
| JP 2012-65481 A | 29 March 2012 | (Family: none) | |
| WO 2007/125826 A1 | 08 November 2007 | EP 2040373 A1<br>paragraphs [0001]-[0115], fig. 1-14<br>CN 101467344 A | |
| JP 2006-20381 A | 19 January 2006 | US 2006/0001392 A1<br>paragraphs [0001]-[0204], fig. 1-11<br>EP 1612924 A2<br>CN 1716753 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3233097 B
- JP 6311402 B